(19) Europäisches Patentamt / European Patent Office / Office européen des brevets

(11) **EP 2 939 334 B1**

(12) **EUROPÄISCHE PATENTSCHRIFT**

(45) Veröffentlichungstag und Bekanntmachung des Hinweises auf die Patenterteilung:
**28.04.2021   Patentblatt 2021/17**

(21) Anmeldenummer: **13786245.4**

(22) Anmeldetag: **05.11.2013**

(51) Int Cl.:
***H02K 35/04*** (2006.01)

(86) Internationale Anmeldenummer:
**PCT/EP2013/072985**

(87) Internationale Veröffentlichungsnummer:
**WO 2014/072267 (15.05.2014 Gazette 2014/20)**

(54) **INDUKTIONSGENERATOR UND VERFAHREN ZUM GENERIEREN EINES ELEKTRISCHEN STROMS UNTER VERWENDUNG EINES INDUKTIONSGENERATORS**

INDUCTION GENERATOR AND METHOD FOR GENERATING AN ELECTRIC CURRENT USING AN INDUCTION GENERATOR

GÉNÉRATEUR À INDUCTION ET PROCÉDÉ POUR GÉNÉRER UN COURANT ÉLECTRIQUE AU MOYEN D'UN GÉNÉRATEUR À INDUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2012   DE 102012220418**

(43) Veröffentlichungstag der Anmeldung:
**04.11.2015   Patentblatt 2015/45**

(73) Patentinhaber: **ZF Friedrichshafen AG**
**88046 Friedrichshafen (DE)**

(72) Erfinder: **RUFF, Eduard**
**91275 Auerbach (DE)**

(74) Vertreter: **ZF Friedrichshafen AG**
**Gewerblicher Rechtsschutz**
**Löwentalerstraße 20**
**88046 Friedrichshafen (DE)**

(56) Entgegenhaltungen:
**CN-A- 101 353 981      CN-A- 101 764 495**
**JP-A- H1 132 470      US-A- 3 067 404**
**US-A- 5 693 990      US-A1- 2003 016 089**

**Beschreibung**

Die vorliegende Erfindung bezieht sich auf einen Induktionsgenerator und ein Verfahren zum Generieren eines elektrischen Stroms unter Verwendung eines Induktionsgenerators.

Bereits bekannte elektromagnetische Energiewandler, die beispielsweise bei Funkschaltern eingesetzt werden, nutzen im Grunde stets dasselbe Prinzip. Durch eine Bewegung eines Magnetsystems mit einem Permanentmagneten oder einer Bewegung eines Magnetkerns selbst wird eine schlagartige Magnetflussveränderung in einem Magnetkreis verursacht, wodurch in einer statisch auf dem Magnetkern platzierten Spule mittels Induktion elektrische Energie erzeugt wird. In der Regel nutzen die Systeme während eines Schaltvorgangs eine komplette magnetische Umpolung des Magnetkreises.

Die DE 101 12 072 A1 offenbart ein Schaltelement mit einem Betätigungsorgan, das über eine Hebelanordnung mit einem Energiewandler des Schaltelements derart in Wirkverbindung steht, dass die Bewegung des Betätigungsorgans auf den Energiewandler übertragbar ist. Dadurch wandelt der Energiewandler wenigstens einen Teil der zur Betätigung des Betätigungsorgans aufgewandten mechanischen Energie in elektrische Energie um.

Weiterhin offenbart die US Patentschrift US 3,067,404 einen Induktionsgenerator gemäß dem Oberbegriff des Anspruchs 1 sowie ein Verfahren zum Generieren eines elektrischen Stroms unter Verwendung eines Induktionsgenerators nach Anspruch 13. Insbesondere offenbart die US 3,067,404 einen Vibrationsdetektor, der ein als auslenkbar ausgestaltetes, federgelagertes Spulenelement und eine Magnetanordnung aufweist, welche in Wechselwirkung dazu dienen, einen Relativbewegung in ein elektrisches Signal umzuwandeln.

Vor diesem Hintergrund werden erfindungsgemäß ein verbesserter Induktionsgenerator und ein verbessertes Verfahren zum Generieren eines elektrischen Stroms gemäß den Hauptansprüchen vorgeschlagen. Vorteilhafte Ausgestaltungen ergeben sich aus den Unteransprüchen und der nachfolgenden Beschreibung.

In Bezug auf einen Induktionsgenerator errechnet sich die elektrische Energie aus folgenden Verhältnissen:

$$E_e = E_m - E_v$$

$$E_v = E_{vm} + E_{vmg} + E_{ve}$$

Hieran schließt sich die ursprüngliche Seite 2 an Dabei gilt:

$E_e$ = elektrische Energie
$E_m$ = mechanische Energie
$E_v$ = Verlustenergie

$E_{vm}$ = mechanische Verlustenergie
$E_{vmg}$ = magnetische Verlustenergie
$E_{ve}$ = elektrische Verlustenergie

Neben der Tatsache, dass eine Leistung eines Induktionsgenerators erheblich verbessert werden kann, wenn für die Energieumsetzung die Spule des Generators anstelle des wesentlich schwereren Magnetsystems bewegt wird, ist insbesondere die Erkenntnis von Bedeutung, dass der Wirkungsgrad eines Induktionsgenerators noch weitergehend verbessert werden kann, wenn zur Stromerzeugung ein möglichst großer Teil des Wicklungsumfangs der Spule einem Magnetfeld ausgesetzt wird. Beispielsweise kann der gesamte, nahezu der gesamte, mehr als dreiviertel oder mehr als zwei Drittel des Wicklungsumfangs der Spule einem Magnetfeld ausgesetzt werden. So kann nämlich eine wirksame Reduzierung von Widerstandsverlusten im Wicklungsbereich und damit eine bessere Energieausbeute erzielt werden. Mit dem hier vorgestellten Konzept können beide Ansätze, also die Bewegung der Spule anstelle des Magnetsystems sowie die möglichst vollumfängliche Magnetfelddurchsetzung der Spule kombiniert umgesetzt und ein besonders leistungsstarker Induktionsgenerator realisiert werden.

Ein gemäß Ausführungsformen der hier vorgestellten Erfindung konzipierter Induktionsgenerator eignet sich beispielsweise zum Einsatz in Geräten mit flacher Bauart, z. B. Funkwandschalter wie Lichtschalter oder ähnliche Installationsschalter, bei denen die Betätigungsrichtung lotrecht zum Aufbau gerichtet sein sollte. Auf eine zusätzliche mechanische Umlenkung der Krafteinleitung kann nämlich bei dem hier vorgestellten Konzept verzichtet werden. So kann eine weitere Wirkungsgraderhöhung erreicht werden.

Für die kinetische Energie bzw. Bewegungsenergie gelten folgende Zusammenhänge:

$$E_{kin.} = 0,5 \times m \times v^2$$

Dabei gilt:

$E_{kin.}$ = kinetische Energie
m = Masse
v = Geschwindigkeit

Die elektrische Energie eines Generators errechnet sich wie folgt:

$$E_{el.} = U^2 \times t / R$$

Dabei gilt:

$E_{el.}$ = elektrische Energie
U = Spannung
t = Zeit

R = elektrischer Widerstand

v ≈ U

So ist es also sinnvoller, in die Erhöhung von Geschwindigkeit oder Spannung anstatt in die Erhöhung von Masse oder Zeit zu investieren, insbesondere in Anbetracht der Tatsache, dass eine magnetostatische Erhöhung der Flussdichte im Eisenkreis naturbedingt nur bis zu einem gewissen Grad möglich ist, da auch die besten weichmagnetischen Materialien nur eine maximale Flussdichte von ca. 2,4 T absolvieren können. Selbstverständlich ist es erstrebenswert, die Flussdichte bzw. das Magnetfeld möglichst hoch zu halten; aus Kostengründen kann die Flussdichte beispielsweise im Bereich von 1,8 - 2,0 T gewählt werden (Fe, FeSi). Eine Reduzierung des Spulenwiderstandes kann zusätzlich einen positiven Beitrag zur Energiegewinnung leisten.

Gemäß Ausführungsformen der vorliegenden Erfindung kann der Wirkungsgrad bei der elektromagnetischen Energiewandlung entscheidend verbessert werden, indem darauf verzichtet wird, ein relativ schweres Element des Eisenkreises, also das Magnetelement oder Magnetkern, auf einem kurzen Weg möglichst schnell zu beschleunigen und am Ende des Zyklus möglichst schnell abzubremsen.

Mit dem hier vorgestellten Konzept kann nun der größte Teil der Energie, der sonst in einem Aufprall nutzlos vernichtet würde, umgesetzt werden. Zusätzlich kann die Geräuschentwicklung reduziert und die Lebensdauer des Generators verlängert werden. Der hohe Wirkungsgrad eines hierin vorgestellten Induktionsgenerators verdankt sich insbesondere der Tatsache, dass die Kraft für die Beschleunigung des relativ schwer beweglichen Magnetsystems nicht mehr benötigt wird. Als Nebeneffekte entfallen auch mechanische Verluste in der linearen Lagerung des beweglichen Teils sowie die durch die relativ niedrige Eigenfrequenz bedingte Gefahr, dass das System in einem praxisbezogenen Vibrationsspektrum in eine ungewollte Resonanzschwingung gerät und Energie erzeugt, was bei einem Funkschalter zur Erzeugung ungewollter Funksignale führen könnte.

Gemäß dem hier vorgestellten Ansatz erübrigt es sich, einen mit einer Induktionsspule zusammenwirkenden Magnet- bzw. Spulenkern vollständig umzupolen. Es müssen keine oder nur geringe magnetische Verluste in Kauf genommen werden. Ein gemäß Ausführungsformen dieser Erfindung gestalteter Induktionsgenerator benötigt kein den Wirkungsgrad verringerndes Getriebe und hat keinen mechanisch anfälligen komplexen Aufbau.

Ein gemäß dem hier vorgestellten Konzept entworfener Induktionsgenerator kann sämtliche Kriterien vereinen, die einen optimalen elektromechanischen Energiewandler, beispielsweise für autarke Funksysteme ausmachen. Dazu gehören ein kleiner Bauraum, eine hohe Energiedichte, ein hoher Wirkungsgrad, ein kurzer Aktivierungsweg, eine geringe Aktivierungskraft, eine geringe Geräuschentwicklung, eine möglichst konstante Energiequantität, eine von der Betätigungsgeschwindigkeit unabhängige Funktion, Robustheit gegenüber Temperaturveränderungen, mechanische Robustheit sowie geringe Herstellungskosten.

Der beschriebene Ansatz kommt der steigenden Nachfrage nach autarken Funksystemen entgegen, die in der Lage sind, aufwendige Funkprotokolle wie KNX-RF, ZigBe, Bluetooth Low Energy oder W-LAN mit hoher Sendeleistung und mehreren Wiederholungen zu realisieren. Dies ist nur mit außerordentlich leistungsfähigen Generatoren (0,7 bis 2 mWs) möglich. Eine einfache Vergrößerung bekannter Energiewandler ist dabei nicht zielführend, da die Bedienbarkeit solcher Systeme aufgrund der weiterhin steigenden Betätigungskräfte und Dimensionen sowie der vermehrten Geräuschentwicklung ausgeschlossen oder stark erschwert wird. Der nachfolgend beschriebene Induktionsgenerator kann für solche Einsatzgebiete verwendet werden, bei denen bei kleiner Bauform eine große Energieausbeute erforderlich ist.

Ein Induktionsgenerator, mit einer Magnetanordnung zum Erzeugen eines Dauermagnetfelds, einer ringförmigen Spule, einem Federelement und einem von dem Dauermagnetfeld durchdrungenen Luftkanal, wobei die Magnetanordnung einen ersten Polabschnitt, einen zweiten Polabschnitt und einen zwischen dem ersten Polabschnitt und dem zweiten Polabschnitt angeordneten Magneten umfasst, die Spule mit dem Federelement verbunden und in dem Luftkanal bewegbar angeordnet ist und das Federelement ausgebildet ist, um ansprechend auf eine Auslenkung der Spule eine Oszillationsbewegung der Spule in dem Luftkanal quer zu einem magnetischen Fluss des Dauermagnetfelds innerhalb des Luftkanals zu bewirken, ist dadurch gekennzeichnet, dass der Luftkanal eine Ringform aufweist und ausgebildet ist, die ringförmige Spule vollumfänglich aufzunehmen.

Bei dem Induktionsgenerator oder elektrischen Generator handelt es sich um eine Vorrichtung, die ausgebildet ist, um mittels elektromagnetischer Induktion elektrischen Strom oder elektrische Spannung zu erzeugen. Ein derartiger Induktionsgenerator kann beispielsweise in Zusammenhang mit einem autarken Funkschalter, der z. B. zum Ein- und Ausschalten einer Beleuchtungseinrichtung verwendet wird, eingesetzt werden. Die Komponenten der Magnetanordnung können z. B. Eisen, Kobalt, Nickel oder Ferrit oder eine Legierung aus mehreren dieser Metalle aufweisen und ausgebildet sein, um ein statisches Magnetfeld, das Dauermagnetfeld zu bilden. Die Magnetanordnung kann einteilig gebildet sein, sodass der erste Polabschnitt, der zweite Polabschnitt und der dazwischen liegende Magnet äußerlich nicht unterscheidbare einzelne Bereiche der Magnetanordnung bilden können. Die Übergänge zwischen den Bereichen können dabei fließend sein, wobei der erste oder der zweite Polabschnitt den Nordpol und der jeweils andere den Südpol der Magnetanordnung bilden kann. Je eine Hälfte des Magneten kann dem Nordpolbereich und dem Südpolbereich der Magnetanordnung zuzuordnen sein.

Alternativ kann die Magnetanordnung auch mehrteilig gebildet sein. Gemäß dieser Ausführungsform kann der Magnet als eigenständiger Permanentmagnet bzw. Dauermagnet mit Nordpol und Südpol ausgebildet sein. Der erste und der zweite Polabschnitt können beispielsweise durch je einen Polschuh gebildet sein, wobei einer der Polschuhe an den Südpol des Magneten angrenzend angeordnet ist und der andere der Polschuhe an den Nordpol des Magneten angrenzend angeordnet sein kann. Die Polschuhe können aus einem Material mit hoher Permeabilität, z. B. Eisen, hergestellt sein. Sie können durch die Polarität des jeweils angrenzenden Pols des Magneten magnetisiert werden und die magnetischen Feldlinien des Magneten in einer definierten Form heraustreten lassen. Insbesondere können der erste und der zweite Polabschnitt eine unterschiedliche Größe und Form aufweisen.

Des Weiteren kann die Ringform des Luftkanals kreisrund oder eckig, beispielsweise rechteckig, dreieckig oder vieleckig verlaufen. Der Luftkanal kann einen Boden und eine Innenwand und eine der Innenwand gegenüberliegende Außenwand aufweisen. Der Boden des Luftkanals kann parallel zu einer durch den ersten Polabschnitt gebildeten Grundfläche des Induktionsgenerators verlaufen. Der Luftkanal kann nach oben offen sein oder durch eine Kanalabdeckung abgedeckt sein. Ein Querschnitt des Luftkanals kann durchgehend gleichbleibend sein. Der magnetische Fluss des Dauermagnetfelds kann - je nach Polung des Magneten - von der Innenwand des Luftkanals zu der Außenwand oder umgekehrt von der Außenwand des Luftkanals zu der Innenwand verlaufen.

Bei der ringförmigen Spule kann es sich um eine Wicklung aus einem oder einer Mehrzahl von elektrischen Leitern, z. B. Kupferdrähten, handeln. Insbesondere kann eine Ausprägung der Ringform der - an eine Dimension des Luftkanals angepassten - Spule der des ringförmigen Luftkanals entsprechen, sodass die Spule, vorzugsweise gleichmäßig von Wänden und Boden des Luftkanals beabstandet in diesem anordenbar ist. Die ringförmige Spule kann so mit dem Federelement verbunden sein, dass sie lotrecht zu ihrer Wicklungsebene auslenkbar in dem Luftkanal gelagert ist. Die Auslenkung der ringförmigen Spule kann durch ein Auslenkungsmittel des Induktionsgenerators erfolgen, um die durch das Federelement ermöglichte Oszillationsbewegung der Spule anzustoßen. Bei der Oszillationsbewegung kann es sich um eine gedämpfte Schwingung handeln, deren Stärke sich abhängig von einem spezifischen Aufbau und/oder einer spezifischen Federkraft des Federelements mit der Zeit abschwächt und schließlich ausklingt. Über die quer zu dem magnetischen Fluss des Dauermagnetfelds erfolgende Schwingung der Spule kann ein elektrischer Stromfluss in dem die Spule bildenden Leiter erzeugt werden. Insbesondere kann die ringförmige Spule kernlos ausgebildet sein. Mit anderen Worten kann die Wicklung der Spule auf einem Spulenwicklungsträger ausgeführt werden, wobei der Spulenwicklungsträger derart ausgestaltet ist, dass eine haltbare bzw. stabile Wicklung zum Ausbilden der ringförmigen Spule möglich ist. Der Spulenwicklungsträger kann vorzugsweise durch ein Rahmenelement ausgebildet sein, das seinerseits einteilig oder mehrteilig ausgeformt sein kann. Auf diese Weise kann die Spule mit einem besonders geringen Gewicht ausgeführt werden. Dadurch ergeben sich die Vorteile, dass die Spule gegen einen nur geringen Widerstand sehr schnell aus einer Ruheposition in Schwingung versetzt werden kann und die Schwingung an sich eine sehr hohe Frequenz aufweisen kann. So kann der Wirkungsgrad des Induktionsgenerators verbessert werden. Es können ein oder mehrere Federelemente eingesetzt werden, die die Spule tragen und die Oszillationsbewegung der Spule ermöglichen können. Das Federelement kann eine oder eine Mehrzahl einer geeignet ausgeführten Feder, beispielsweise eine Biegefeder, Zugfeder oder Druckfeder umfassen. Das Federelement kann ausgebildet sein, um die Spule zu tragen und die Oszillationsbewegung der Spule zu ermöglichen.

Gemäß einer Ausführungsform des Induktionsgenerators kann der Luftkanal durch wenigstens zwei gegenüberliegende Wandungsbereiche begrenzt sein, wobei einer der Wandungsbereich durch einen Wandungsabschnitt des ersten Polabschnitts und der andere der Wandungsbereiche durch eine Seitenfläche des zweiten Polabschnitts ausgebildet sein kann. Dazu können der erste Polabschnitt, der Magnet und der zweite Polabschnitt einen Stapel bildend aufeinander angeordnet sein, wobei der erste Polabschnitt vorzugsweise des Weiteren ein Boden- oder Grundelement des Induktionsgenerators bilden kann. Je nach bevorzugter Ausgestaltung der Magnetanordnung kann entweder der Wandungsabschnitt des ersten Polabschnitts eine Innenwand des Luftkanals und der Wandungsabschnitt des zweiten Polabschnitts eine Außenwand des Luftkanals oder umgekehrt der Wandungsabschnitt des ersten Polabschnitts eine Außenwand des Luftkanals und der Wandungsabschnitt des zweiten Polabschnitts eine Innenwand des Luftkanals ausbilden.

Beispielsweise kann der erste Polabschnitt einen Topf zum Aufnehmen des Magneten und des zweiten Polabschnitts ausformen, wobei der Wandungsabschnitt des ersten Polabschnitts durch den umlaufenden Außenrandbereich des topfförmigen ersten Polabschnitts ausgebildet ist. Zur Bildung des Topfes kann der umlaufende Außenrandbereich des ersten Polabschnitts in Form einer Krempe so umgeschlagen sein, dass der umgeschlagene Bereich senkrecht zu dem Restbereich des ersten Polabschnitts verläuft, wobei der zu der Mitte des Induktionsgenerators hin weisende bzw. der radial nach innen weisende Wandungsabschnitt eine Außenwand des Luftkanals bildet. Entsprechend kann die Seitenfläche des innerhalb des Topfes angeordneten zweiten Polabschnitts eine parallel zu der Außenwand verlaufende Innenwand des Luftkanals bilden. Die Seitenfläche weist dabei radial nach außen. Diese Ausführungsform weist den Vorteil auf, dass der Magnet gegenüber einem Außenbereich des Induktionsgenerators gut geschützt ist.

Alternativ kann die Magnetanordnung ringförmig ausgebildet sein, wobei der erste Polabschnitt eine nabenartige Ringaufnahme zum Aufnehmen des Magneten und des zweiten Polabschnitts ausformt. Der Wandungsabschnitt des ersten Polabschnitts ist dabei durch einen zylinderartigen Mittenbereich des ersten Polabschnitts ausgebildet. Wiederum kann der umgeschlagene Bereich senkrecht zu dem Restbereich des ersten Polabschnitts verlaufen, wobei der umgeschlagene Bereich bzw. der Wandungsabschnitt hier jedoch eine Innenwand des Luftkanals bildet. Der Restbereich formt eine Auflagefläche zur Aufnahme des ringförmigen Magneten und des ringförmigen zweiten Polabschnitts aus. Entsprechend kann eine Innenfläche des ringförmigen, auf den zylinderartigen Mittenbereich aufgesetzten, zweiten Polabschnitts eine Außenwand des Luftkanals bilden. Beispielsweise kann die Magnetanordnung als ein kreisförmiger Ring ausgebildet sein. Mit der Verwendung eines Ringmagneten kann der Induktionsgenerator besonders kostengünstig hergestellt werden, da dafür auf kostengünstige Materialien zurückgegriffen werden kann.

Insbesondere kann der zylinderartige Mittenbereich des ersten Polabschnitts ausgehend von dem den Mittenbereich einfassenden Restbereich eine der Materialstärke des Magneten und des zweiten Polabschnitts entsprechende Höhe aufweisen. Mit anderen Worten kann die Magnetanordnung dergestalt sein, dass die in eine gleiche Richtung weisenden freien Oberflächenseiten des ersten und zweiten Polabschnitts in einer gemeinsamen Ebene liegen, wodurch eine plane bzw. ebene Auflagefläche mit maximaler Auflage- bzw. Anfläche geschaffen werden kann. Ferner können die beiden Polabschnitte so ein günstig geformtes Gehäuse zum Schutz der Spule und der Magnetanordnung bilden.

Eine Wicklung der ringförmigen Spule kann längs des Luftkanals verlaufen. Somit kann ein Leiter der Spule parallel oder nahezu parallel zu dem Boden des Luftkanals verlaufen. So kann auf einfache Weise gewährleistet werden, dass der Leiter stets quer zu dem magnetischen Fluss des Dauermagnetfelds angeordnet ist und elektrische Spannung in diesem induziert werden kann.

Das Federelement kann ferner ausgebildet sein, um die Oszillationsbewegung der Spule entlang einer Mittelachse der Spule zu bewirken. Die Wicklung der Spule verläuft um die Mittelachse der Spule herum, sodass die Mittelachse orthogonal zu einer die Wicklung umfassenden Wicklungsebene der Spule ausgerichtet sein kann. Entsprechend kann die ringförmige Spule parallel oder annähernd parallel zu den Wänden des Luftkanals und im rechten Winkel zu dem magnetischen Fluss abwechselnd tiefer in den Luftkanal eintauchen und wieder zurückschnellen, ohne zu irgendeinem Zeitpunkt während der Oszillation je den magnetischen Fluss des Dauermagnetfelds zu verlassen. Damit kann durch die Oszillationsbewegung auf einfache Weise eine maximale Spannung in der Wicklung der Spule induziert werden.

Insbesondere kann das Dauermagnetfeld einen torusförmigen Magnetfeldkreis bilden, dessen magnetischer Fluss den Luftkanal zwischen dem ersten Polabschnitt und dem zweiten Polabschnitt quert. Dadurch kann die Spule vollumfänglich von dem Magnetfeld durchsetzt werden.

Gemäß einer alternativen Ausführungsform des Induktionsgenerators kann der Luftkanal durch wenigstens zwei gegenüberliegende Wandungsbereiche begrenzt sein, wobei einer der Wandungsbereich durch einen Wandungsabschnitt der Magnetanordnung und der andere der Wandungsbereiche durch einen Wandungsabschnitt eines der Magnetanordnung gegenüberliegend angeordneten Magnetflussleiters ausgebildet sein kann. Dazu können der erste Polabschnitt, der Magnet und der zweite Polabschnitt einen Stapel bildend aufeinander angeordnet sein, wobei eine Seitenfläche dieser Stapelanordnung den Wandungsabschnitt der Magnetanordnung bilden kann. Der Magnetflussleiter kann Bestandteil des Induktionsgenerator sein und z. B. Eisen, Kobalt, Nickel oder Ferrit oder eine Legierung aus mehreren dieser Metalle aufweisen und ausgebildet sein, das von der Magnetanordnung erzeugte Dauermagnetfeld zu einem Anteil von einem Polabschnitt zu dem anderen Polabschnitt zu leiten. Je nach bevorzugter Ausgestaltung des Induktionsgenerators kann entweder der Wandungsabschnitt der Magnetanordnung eine Innenwand des Luftkanals und der Wandungsabschnitt des Magnetflussleiters eine Außenwand des Luftkanals oder umgekehrt der Wandungsabschnitt der Magnetanordnung eine Außenwand des Luftkanals und der Wandungsabschnitt des Magnetflussleiters eine Innenwand des Luftkanals ausbilden. Die erstgenannte Ausgestaltung wird aufgrund der kompakteren Ausgestaltungsmöglichkeit im Vergleich zu der Letztgenannten besonders bevorzugt.

Für die vorliegende Erfindung ist ausgehend von einem Zentrum bzw. einer Mitte des Induktionsgenerators in radialer Richtung desselbigen ein zu der Mitte nahe liegender Abschnitt als Innen und ein dazu radial zu der Mitte weiter beabstandeter Bereich als Außen zu verstehen.

Insbesondere kann der Magnetflussleiter ein der Materialstärke des Magneten, des ersten Polabschnitts und des zweiten Polabschnitts entsprechendes Ausmaß entlang einer der Stapelachse der Stapelanordnung parallel verlaufende Richtung aufweisen. So können der erste und zweite Polabschnitt jeweils einem Endbereich des Magnetflussleiters gegenüberliegend angeordnet sein, wobei der von dem Magnetflussleiter geleitete Anteil des Dauermagnetfeldes abhängig von der Polarität des Magneten von einem der beiden Endbereich aufgenommen, über einen dazwischen liegenden Zwischenbereich zu dem anderen der beiden Endbereiche geleitet und an dem anderen Endbereich wieder abgegeben werden kann.

Vorzugsweise sind die Magnetanordnung und der Magnetflussleiter ringförmig ausgebildet. Beispielsweise können die Magnetanordnung und der Magnetflussleiter als ein kreisförmiger Ring ausgebildet sein. Mit der Verwendung eines Ringmagneten und eines Ringmagnetflussleiters kann der Induktionsgenerator besonders kostengünstig hergestellt werden, da dafür auf kostengünstige Materialien zurückgegriffen werden kann.

Weiterhin bevorzugt weist die ringförmige Spule zwei voneinander beabstandete, aus wenigstens einem Wicklungskörper wie beispielsweise einem Wicklungsdraht ausgebildete gegenläufig verlaufende Wicklungen auf, wobei eine der Wicklungen quer zu einem magnetischen Fluss des Dauermagnetfeldes zwischen einem der beiden Polabschnitte und dem Magnetflussleiter und die andere der Wicklungen quer zu einem magnetischen Fluss des Dauermagnetfeldes zwischen dem anderen der beiden Polabschnitte und dem Magnetflussleiter oszillierend bewegbar ist. Vorzugsweise sind die beiden Wicklungen auf einem gemeinsamen Spulenträger angeordnet, der für jede der beiden Wicklungen einen Wicklungsbereich aufweist, wobei die beiden Wicklungsbereiche über wenigstens einen Wicklungskörperumkehrer miteinander verbunden sind. Der jeweilige Wicklungsbereich ist vorzugsweise durch einen Wicklungskanal ausgeformt, wobei der Wicklungskörperumkehrer durch einen die Wicklungskanäle verbindenden Zwischenkanal ausgebildet ist. Der Zwischenkanal formt dabei einen in Umlaufrichtung des Spulenträgers zeigenden Anlageflächenabschnitt aus, an welchen der Wicklungskörper zum Umkehren von einer Wicklungsrichtung in die andere gegenläufige Wicklungsrichtung anlegbar ist. Die ringförmige Spule kann damit eine rechtsgängige und eine linksgängige Wicklung aufweisen, die miteinander wirkverbunden und weiter bevorzugt aus einem Wicklungskörper ausgebildet sind. Dadurch können die zwischen der Magnetanordnung und dem Magnetflussleiter entgegen gerichteten magnetischen Flüsse des Dauermagnetfeldes gleichzeitig zur Erzeugung der Induktionsspannung hergenommen werden, wodurch sich der Wirkungsgrad erhöht.

Gemäß einer Ausführungsform des Induktionsgenerators weist dieser eine Trägerstruktur zum Tragen der Magnetanordnung und des Federelementes auf, wobei ein Ende des Federelements mittels der Trägerstruktur ortsfest gehalten werden kann. Dabei kann die Verbindung der Magnetanordnung mit der Trägerstruktur direkt oder indirekt - z. B. über den ersten Polabschnitt - gestaltet sein. Bei der Trägerstruktur kann es sich um ein Element des Induktionsgenerators handeln, über das zum einen der Induktionsgenerator in einem Gehäuse befestigt werden kann und zum anderen der von dem Induktionsgenerator erzeugte elektrische Strom abgeführt werden kann. Die Trägerstruktur kann beispielsweise aus einem Kunststoff hergestellt sein und ausgebildet sein, um einen Seitenbereich der Spule-Magnetsystem-Anordnung in Eingriff zu nehmen. Die Spule kann durch das Federelement beweglich gegenüber der Trägerstruktur und somit gegenüber dem Dauermagnetfeld gelagert sein. Diese Ausführungsform weist den Vorteil auf, dass insbesondere der relativ schwere Magnet statisch zur Stromerzeugung eingesetzt werden kann, wodurch die Geräuschentwicklung minimiert und die Lebensdauer des Induktionsgenerators verlängert werden kann. Ebenso kann eine Baugröße des Induktionsgenerators kleiner ausfallen, da ein Gehäuse oder die Trägerstruktur keiner Belastung durch eine Beschleunigung des schweren Magneten standhalten muss.

Alternativ dazu kann die Trägerstruktur wenigstens zum Tragen des Federelementes und des Magnetflussleiters eingerichtet sein, wobei ein Ende des Federelementes mittels der Trägerstruktur ortsfest gehalten werden kann. Weiter bevorzugt kann die Trägerstruktur ringförmig ausgestaltet sein, wobei die ringförmige Spule-Magnetsystem-Anordnung im Mittenbereich der Trägerstruktur aufnehmbar und die ringförmige Spule auslenkbar bzw. oszillierbar über das Ende des Federelementes haltbar ist. Die Spule kann somit durch das Federelement beweglich gegenüber der Trägerstruktur und somit gegenüber dem Dauermagnetfeld gelagert sein. Der ringförmige Magnetflussleiter kann dabei klemmend von der Trägerstruktur getragen werden. Dies kann beispielsweise über einen Presssitz des Magnetflussleiters in dem Mittenbereich der Trägerstruktur erfolgen. Alternativ oder zusätzlich kann der Magnetflussleiter über ein oder mehrere Tragelemente wie beispielsweise Tragnasen von der Trägerstruktur getragen werden. Weiterhin alternativ oder zusätzlich kann der Magnetflussleiter über eine Klebeverbindung von der Trägerstruktur getragen werden. Weiterhin alternativ kann der Magnetflussleiter über ein Schraubgewinde an der Trägerstruktur befestigt sein. Weiterhin alternativ kann die Trägerstruktur selbst den Magnetflussleiter in einem der Spule gegenüberliegenden Bereich ausformen. Die Trägerstruktur kann beispielsweise aus einem Kunststoff hergestellt, wobei der den Magnetflussleiter ausformende Abschnitt der Trägerstruktur einen magnetischen Fluss eines Dauermagnetfeldes leitende Elemente aufweist. Der den Magnetflussleiter ausformende Abschnitt der Trägerstruktur kann dabei vollständig aus den magnetflussleitenden Elementen ausgebildet und mit der übrigen Kunststoffstruktur der Trägerstruktur verbunden sein. Alternativ dazu kann der den Magnetflussleiter ausformende Abschnitt der Trägerstruktur aus Kunststoff ausgeformt sein, in dem die magnetflussleitenden Elemente eingebettet, integriert oder auf dem diese Elemente aufgetragen sind. Diese Ausführungsform weist ebenfalls die vorgenannten Vorteile auf.

Vorzugsweise weist die ringförmige Trägerstruktur in radialer Richtung einen ersten Tragring zum Tragen des Magnetflussleiters und einen daran radial außen angrenzenden zweiten Tragring zur Anlage mit dem Ende des Federelementes auf, wobei der erste Tragring entlang einer zu der radialen Richtung orthogonal stehenden Mittenachse der Trägerstruktur schmaler als der zweite Tragring ausgebildet ist. Dadurch kann zum Einen eine dichte Anordnung des Magnetflussleiters an der Spule sowie zum Anderen ein in radialer Richtung verlaufender großer Schwungbereich für das Federelement bereitgestellt werden kann.

Weiter bevorzugt weist der zweite Tragring ein unterbrochenes Ringsegment auf, welches den ersten Tragring radial freilegt. Dadurch kann ein Betätigungsbereich bereitgestellt werden, in welches ein Betätigungselement zum Auslenken der Spule ausgehend von dem Mittenbereich der Trägerstruktur hineinragen kann.

Weiterhin bevorzugt weist der zweite Tragring in einem Ringsegment eine entlang zu der radialen Richtung orthogonal stehenden Mittenachse verlaufende Durchbrechung auf, welche von einer Oberflächenseite zu der gegenüberliegenden Oberflächenseite der Trägerstruktur reicht. Dadurch kann eine Verbindung zwischen den Oberflächenseiten bereitgestellt werden, welche beispielsweise zum Durchleiten eines elektrischen Kontaktes der Spule-Magnetsystem-Anordnung zum elektrischen Kontaktieren derselbigen von nur einer Oberflächenseite hergenommen werden kann.

Vorzugsweise weist die Trägerstruktur in radialer Richtung einen an den zweiten Tragring radial außen angrenzenden Abschlussring auf, der entlang der zu der radialen Richtung orthogonal stehenden Mittenachse breiter als der zweite Tragring ausgebildet ist. Dadurch kann eine das Federelement einfassende Fläche und ein Gehäuse zum Schutz der Spule-Magnetsystem-Anordnung geschaffen werden.

Weiter bevorzugt ist die Trägerstruktur zu einer radial verlaufenden Mittenebene der Trägerstruktur symmetrisch ausgebildet. Die Trägerstruktur lässt sich dadurch einfacher handhaben, da jede der beiden zueinander gegenüberliegende, in Mittenachsenrichtung der Trägerstruktur weisende Oberflächenseite als Oberoder als Unterseite für den Induktionsgenerator hergenommen werden kann.

Vorzugsweise weist die Trägerstruktur ein Tragelement zum Tragen der Magnetanordnung auf, wobei sich das Tragelement radial von dem zweiten Tragring oder von dem Abschlussring bis wenigstens zu dem Mittenbereich der Trägerstruktur erstreckt. Weiter bevorzugt ist das Tragelement einstückig mit der Trägerstruktur beispielsweise mittels eines Spritzgussverfahrens ausgeformt. Alternativ dazu kann das Tragelement an der Trägerstruktur befestigt sein oder weiterhin alternativ an der Trägerstruktur anliegen. Vorzugsweise bildet das Tragelement einen Boden für die Trägerstruktur aus, welcher wenigstens zur Abdeckung des Mittenbereichs der Trägerstruktur, in welchem die Spule-Magnetsystem-Anordnung aufnehmbar ist, und des ersten Tragrings eingerichtet ist. Dadurch kann ein Schutz der Spule-Magnetsystemanordnung gewährleistet werden. Alternativ dazu kann das Tragelement zusätzlich zum Abdecken des zweiten Tragrings oder des Abschlussrings eingerichtet sein. Dadurch kann eine einfachere Anlage der Trägerstruktur an dem Tragelement erreicht werden.

Vorzugsweise weist die Trägerstruktur wenigstens ein Kontaktelement zum elektrischen Kontaktieren der in der Trägerstruktur aufnehmbaren Spule-Magnetsystem-Anordnung auf, wobei das Kontaktelement mit einem Verbraucher koppelbar ist. Als Verbraucher wird jede die von der Spule-Magnetsystem-Anordnung erzeugte Energie verbrauchende Einrichtung angesehen. Weiter bevorzugt bildet das Kontaktelement ein Deckelelement für die Trägerstruktur aus, wobei das Deckelelement wenigstens zur Abdeckung des Mittenbereiches der Trägerstruktur und des ersten Tragrings eingerichtet ist. Alternativ dazu kann das Deckelelement zur Abdeckung des zweiten Tragrings oder des Abschlussrings eingerichtet sein. Weiterhin alternativ kann das Kontaktelement vorzugsweise ein wie vorbeschriebenes Tragelement ausbilden oder zusammen mit einem solchen Tragelement verwendet werden. Letzteres ermöglicht eine Einkapselung der Spule-Magnetsystem-Anordnung in der Trägerstruktur, wodurch ein verbesserter Schutz erreicht werden kann.

Vorzugsweise weist die Spule einen Spulenträger auf, der mit einem dem gehaltenen Ende des Federelementes gegenüberliegenden freien Ende des Federelementes verbunden ist. Der Spulenträger kann vorzugsweise unmittelbar oder alternativ über wenigstens ein weiteres Element mit dem freien Ende des Federelementes verbunden sein. So kann eine Federkraft des Federelements über den Spulenträger verlustarm und gleichmäßig auf die Spule übertragen werden. Gleichzeitig ermöglicht diese Ausführungsform eine einfache Umsetzung einer Weiterleitung des in der Spule erzeugten elektrischen Stroms an das Federelement, beispielsweise zur Stromabgabe über einen in das Federelement integrierten Kontakt.

Weiterhin bevorzugt umfasst der Spulenträger ein Betätigungselement zum Auslenken der Spule. Das Betätigungselement kann beispielsweise in Form einer Betätigungszunge ausgebildet und so angeordnet sein, dass es von einem Betätiger leicht erreicht und die Spule aus ihrer Ruhelage in eine von zwei entgegengesetzten Richtungen ausgelenkt werden kann. Nach einer Freigabe des Betätigungselements kann die Oszillationsbewegung der Spule beginnen.

Gemäß einer Ausführungsform des Induktionsgenerators kann das Federelement eine erste Doppelflachfeder und eine zweite Doppelflachfeder aufweisen, zwischen denen die Spule in dem Luftkanal schwingend gelagert ist. Die beiden Doppelflachfedern können identisch aufgebaut sein. Bei der Doppelflachfeder kann es sich um zwei miteinander verbundene Flachbiegefedern handeln, die orthogonal zu der Wicklungsebene der Spule übereinander angeordnet sind. Ein Abstand zwischen den einzelnen Flachbiegefedern kann in etwa einer Höhe der Spule entsprechen. In dieser Anordnung können die Doppelflachfedern ein Doppelparallelogramm bilden, bei dem sich die übereinander angeordneten Federn orthogonal zur Wicklungsebene in zwei entgegengesetzte Richtungen verformen können, um die Spule in eine Oszillationsbewegung entlang dieser Richtungen zu versetzen. Mithilfe dieses so gebildeten Doppelparallelogramms kann die Spule in eine besonders gleichmäßige und lang anhaltende Oszillation versetzt werden. Ein Wirkungsgrad des Induktionsgenerators kann damit maximiert werden.

Erfindungsgemäß formt das Federelement einen elektrischen Leiter zur elektrischen Kontaktierung der Spule aus. Dazu kann ein Abschnitt des Federelements ein Kontaktelement zur Stromabnahme eines aufgrund der Oszillationsbewegung von der Spule bereitgestellten Wechselstroms umfassen. Somit kann das Federelement zur Leitung des in der Spule induzierten elektrischen Stroms, beispielsweise zwischen der Spule und einem elektrischen Verbraucher, eingesetzt werden. Vorteilhafterweise kann das Federelement zwei voneinander elektrisch isolierte Abschnitte aufweisen, über die die Spule sowohl elektrisch kontaktiert als auch gegenüber der Trägerstruktur des Induktionsgenerators beweglich gelagert werden kann. Beispielsweise können elektrische Anschlüsse der Spule über zwei Doppelflachfedern elektrisch kontaktiert werden, wobei die Doppelflachfedern voneinander elektrisch isoliert sind. Mit dieser Ausführungsform kann Bauraum gespart werden, da auf einen separaten Stromabnehmer verzichtet werden kann.

Bei einer bevorzugten Verwendung von beidseitig der Spule angeordneten Doppelflachfedern als das Federelement sowie des Spulenträgers kann dieser beispielsweise zwei Fortsätze aufweisen, in die jeweils ein Ende einer Doppelflachfeder eingreifen kann, um den Spulenträger zu halten.

Die Lagerung der Spule mittels des Doppelparallelogramms ist zwar bevorzugt, jedoch nicht zwingend erforderlich. Die Spule kann beispielsweise auch mittels einer einfachen Blattfeder oder Membrane schwingend gelagert werden. Es ist auch eine einfache lineare Lagerung in der Kombination mit Biege-, Zug- oder Druckfedern möglich. Zur Stromabnahme können dabei die Doppelflachfedern, flexible Folien, Schleifkontakte oder Drähte verwendet werden.

Gemäß einer alternativen Ausführungsform des Induktionsgenerators kann das Federelement eine erste Flachbiegefeder und eine zweite Flachbiegefeder aufweisen, zwischen denen die Spule in dem Luftkanal schwingend lagerbar ist. Die beiden Flachbiegefedern können identisch aufgebaut sein. Die Flachbiegefeder kann aus einer Grundform einer Blattfeder hergestellt sein. Beispielsweise kann eine vorbestimmte Form der Flachbiegefeder mittels Ausstanzen aus der Grundform der Blattfeder erreicht werden. Die Flachbiegefeder weist vorzugsweise ein haltbares Ende und ein dem haltbaren Ende gegenüberliegendes freies Ende zum Halten der Spule, insbesondere des Spulenträgers auf. Das haltbare Ende ist eingerichtet, von der Trägerstruktur gehalten zu werden. Vorzugsweise ist das haltbare Ende eingerichtet, an der Trägerstruktur anliegen zu können. Das freie Ende ist eingerichtet, gegenüber dem haltbaren Ende nach Einwirkung einer Schwingungsanregungskraft frei zu schwingen. Vorzugsweise ist das freie Ende mit dem haltbaren Ende über einen kreissegmentförmigen Federarm verbunden. Vorzugsweise ist die Flachbiegefeder kreisförmig ausgestaltet. Weiter bevorzugt ist das haltbare Ende durch einen wenigstens halbkreisförmigen Flachbiegefederrand ausgebildet, von dessen Endbereichen sich der kreissegmentförmige Federarm jeweils in Richtung einer Mitte der Halbkreisform des Flachbiegefederrandes bis zu einem im Bereich der Mitte der Halbkreisform angeordneten Haltebereich kreissegmentartig fortsetzt, wobei der Haltebereich das freie Ende der Flachbiegefeder ausbildet und zum Halten der Spule oder des Spulenträgers eingerichtet ist. Weiter bevorzugt ist der Haltebereich durch einen kreisförmigen Mittenabschnitt der Flachbiegefeder ausgebildet. Der Mittenabschnitt ist vorzugsweise ausgeformt, an einem zylinderartigen Spulenträger befestigt werden zu können. Der Mittenabschnitt ist weiter bevorzugt an gegenüberliegenden Orten mit den kreissegmentförmigen Federarmen verbunden.

Weiterhin bevorzugt weist die Flachbiegefeder ein Betätigungselement zum Auslenken der Spule auf. Das Betätigungselement kann beispielsweise in Form einer Zunge ausgebildet und so angeordnet sein, dass es von einem Betätiger leicht erreicht und die Spule aus ihrer Ruhelage in eine von zwei entgegengesetzten Richtungen ausgelenkt werden kann. Nach einer Freigabe des Betätigungselements kann die Oszillationsbewegung der Spule beginnen. Weiter bevorzugt ist die Betätigungszunge an einem Übergang des kreissegmentförmigen Federarms zu dem kreisförmigen Mittenabschnitt der Flachbiegefeder angeordnet und ragt in einer zu dem Mittenabschnitt entgegengesetzten Richtung ab.

Ein Abstand zwischen den einzelnen Flachbiegefedern kann vorzugsweise in etwa einer Höhe der Spule bzw. des Spulenträgers entsprechen, wobei die Flachbiegefedern parallel zueinander angeordnet sind. In dieser Anordnung können sich die Federarme der jeweiligen Flachbiegefedern schräg zur Wicklungsebene verformen, um die Spule in eine Oszillationsbewegung zu versetzen. Mittels der zueinander gegenüberliegenden Kraftangriffspunkte der beiden Federarme an dem Mittenabschnitt kann die Spule in eine orthogonal zur Wicklungsebene gerichtete, besonders gleichmäßige und lang anhaltende Oszillation versetzt werden. Ein Wirkungsgrad des Induktionsgenerators kann damit maximiert werden.

Vorzugsweise kann jede der Flachbiegefeder einen elektrischen Leiter zur elektrischen Kontaktierung der Spule ausformen. Dazu kann ein Abschnitt der Flachbiegefeder ein Kontaktelement zur Stromabnahme eines aufgrund der Oszillationsbewegung von der Spule bereitgestellten Wechselstroms umfassen. Vorzugsweise ist das Kontaktelement an dem Flachbiegefederrand angeordnet. Weiter bevorzugt ragt das Kontaktelement von einer die Grundform umfassenden Ebene der Flachbiegefeder ab. Weiterhin bevorzugt ist das Kontaktelement an dem freien Ende als Schleifkontakt ausgeformt. Weiter bevorzugt sind die Schleifkontakte der freien Enden jeder der ersten und zweiten Flachbiegefeder in einer gemeinsamen Ebene angeordnet. Dadurch kann die Flachbiegefeder auf einfache und effiziente Weise zur Leitung des in der Spule induzierten elektrischen Stroms, beispielsweise zwischen der Spule und einem elektrischen Verbraucher, eingesetzt werden. Ferner braucht die elektrische Kontaktierung der Spule nur von einer Seite der Trägerstruktur bzw. der Spule erfolgen.

Gemäß einer Ausführungsform des Induktionsgenerators weist dieser einen zylinderartigen Spulenträger auf, auf dem die bevorzugten Flachbiegefedern befestigbar sind. Der Spulenträger weist an wenigstens einem stirnseitigen Ende ein oder mehrere Haltevorsprünge auf, die von dem Zylinderkörper radial abragen und zur Anlage mit dem Haltebereich der Flachbiegefedern eingerichtet sind. Weiter bevorzugt weist der Spulenträger im Bereich der stirnseitigen Enden ein Innengewinde auf, welches zum Aufschrauben eines mit einem Außengewinde ausgestatteten Halteelements auf das stirnseitige Ende des Spulenträgers eingerichtet ist. Das Halteelement ist dazu vorzugsweise zylinderartig mit einem Außengewinde ausgebildet und weist weiter bevorzugt an einem dem Außengewindeanfang gegenüberliegenden Ende ein oder mehrere Haltevorsprünge auf, die radial von dem zylindrischen Körper des Halteelementes abragen und zur Anlage mit dem Haltebereich der Flachbiegefeder eingerichtet sind. Mittels des auf den Spulenträger aufschraubbaren Halteelementes kann die Flachbiegefeder an dem stirnseitigen Ende des Spulenträgers zwischen den Haltevorsprüngen des Halteelementes und des Spulenträgers gehalten bzw. klemmend befestigt werden. Weiter bevorzugt weist der Spulenträger an jedem der stirnseitigen Enden ein Innengewinde zum Befestigen eines wie vorbeschriebenen Halteelementes auf.

Der Induktionsgenerator kann eine Erfassungseinrichtung zum Erfassen einer Anfangspolarität einer aufgrund der Oszillationsbewegung von der Spule bereitgestellten Wechselspannung aufweisen. Die Anfangspolarität ist abhängig von einer anfänglichen Richtung der auf die Auslenkung folgenden Oszillationsbewegung und somit abhängig von einer Richtung der Auslenkung der Spule. Entsprechend kann die Erfassungseinrichtung ausgebildet sein, um eine anfängliche Richtung eines aufgrund der Oszillationsbewegung von der Spule bereitgestellten Wechselstroms zu erfassen. Dadurch kann beispielsweise bestimmt werden, in welche der zwei entgegengesetzten Richtungen die Spule zur Vorbereitung der Oszillationsbewegung mittels des Betätigungselements ausgelenkt wurde. Auf diese Weise kann erkannt werden, in welche Richtung ein Betätigungselement des Induktionsgenerators bewegt wurde. So kann auf einfache Weise beispielsweise zwischen einem Einschaltvorgang und einem Ausschaltvorgang für ein mit dem Induktionsgenerator verbundenes Gerät, z.

B. eine Beleuchtungseinrichtung, unterschieden werden.

Ein Verfahren zum Generieren eines elektrischen Stroms unter Verwendung eines Induktionsgenerators mit einer Magnetanordnung zum Erzeugen eines Dauermagnetfelds, einer ringförmigen Spule, einem Federelement und einem von dem Dauermagnetfeld durchdrungenen Luftkanal, wobei die Magnetanordnung einen ersten Polabschnitt, einen zweiten Polabschnitt und einen zwischen dem ersten Polabschnitt und dem zweiten Polabschnitt angeordneten Magneten umfasst, die Spule mit dem Federelement verbunden und in dem Luftkanal bewegbar angeordnet ist, und wobei der Luftkanal eine Ringform aufweist und ausgebildet ist, die ringförmige Spule vollumfänglich aufzunehmen, weist die folgenden Schritte auf:

Auslenken der Spule derart, dass eine Oszillationsbewegung der Spule in dem Luftkanal quer zu einem magnetischen Fluss des Dauermagnetfelds innerhalb des Luftkanals bewirkt wird; und
Generieren des elektrischen Stroms in der Spule mittels elektromagnetischer Induktion basierend auf der Oszillationsbewegung der Spule.
Auch in dieser Form eines Verfahrens gemäß Ausführungsformen der hier vorgestellten Erfindung kann das hierin vorgestellte Konzept vorteilhaft umgesetzt werden.

Die Erfindung wird anhand der beigefügten Zeichnungen beispielhaft näher erläutert. Es zeigen:

Fig. 1      eine Prinzipdarstellung zur Erläuterung des Wirkungsgrades bei einem Induktionssystem;

Fig. 2A    eine Prinzipdarstellung eines Induktionsgenerators gemäß einem Ausführungsbeispiel der vorliegenden Erfindung in der Draufsicht;

Fig. 2B    eine Querschnittsansicht des Induktionsgenerators aus Fig. 2A;

Fig. 2C    eine Detailansicht des Induktionsgenerators aus Fig. 1A und 1B in perspektivischer Darstellung;

Fig. 2D    eine Seitenansicht des Induktionsgenerators aus Fig. 2C;

Fig. 2E    eine Draufsicht auf den Induktionsgenerator aus Fig. 2C und 2D im Gehäuse;

Fig. 2F    eine Schnittdarstellung des Induktionsgenerators aus Fig. 2E;

Fig. 2G    eine perspektivische Obenansicht des Induktionsgenerators aus Fig. 2E;

Fig. 2H    eine perspektivische Untersicht des Induktionsgenerators aus Fig. 2E;

Fig. 2I    eine Explosionsdarstellung des Induktionsgenerators aus Fig. 2H;

Fig. 3A    eine Draufsicht auf ein Magnetsystem eines Induktionsgenerators gemäß einem weiteren Ausführungsbeispiel der vorliegenden Erfindung

Fig. 3B    eine Querschnittsansicht des Magnetsystems aus Fig. 3A;

Fig. 3C    eine Explosionsdarstellung des Magnetsystems aus den Fig. 3A und 3B;

Fig. 4    eine perspektivische Draufsicht eines Magnetsystems eines Induktionsgenerators gemäß einem weiteren Ausführungsbeispiel;

Fig. 5    ein Ausschnitt einer Querschnittsansicht des Magnetsystems aus Fig. 4;

Fig. 6    eine perspektivische Draufsicht eines das Magnetsystem aus Fig. 4 einfassende Spulenschwingsystems;

Fig. 7    eine perspektivische Draufsicht des Induktionsgenerators gemäß dem weiteren Ausführungsbeispiel;

Fig. 8    eine perspektivische Seitenansicht des Spulenschwingsystems aus Fig. 6 ohne Wicklung;

Fig. 9A    eine schematische Seitenansicht des Spulenschwingsystems aus Fig. 8 mit Wicklung;

Fig. 9B    eine weitere schematische Seitenansicht des Spulenschwingsystems; und

Fig. 10    ein Ablaufdiagramm eines Verfahrens zum Generieren eines elektrischen Stroms unter Verwendung eines Induktionsgenerators, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

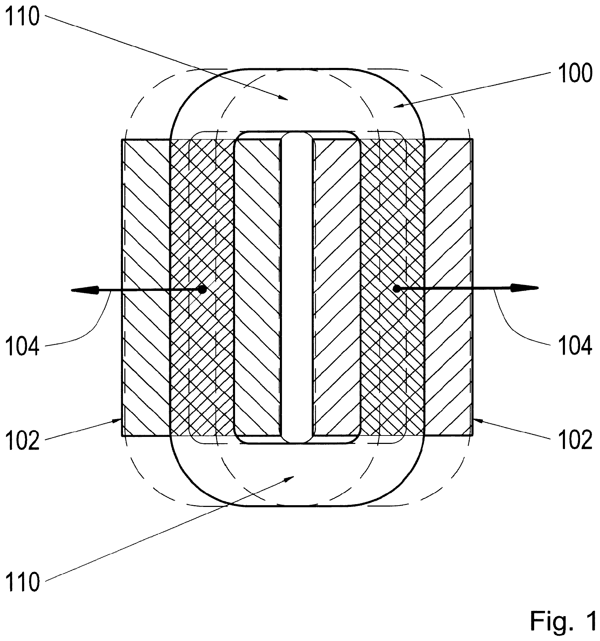

Fig. 1 zeigt eine Prinzipdarstellung zur Erläuterung des Wirkungsgrades bei einem Induktionssystem. Gezeigt ist eine Spule bzw. Wicklung 100, die in einem Magnetfeld 102 eine durch Pfeile gekennzeichnete oszillierende Relativbewegung 104 ausführt. Verschiedene Doppelpfeile kennzeichnen eine Schwingamplitude 106 der Spule 100, eine effektiv genutzte Wicklungslänge 108 der Spule 100 sowie Verlustbereiche 110 der Wicklung 100. Da die Spule 100 im Betrieb in einer durch die Pfeile 104 gekennzeichneten Längsrichtung oszilliert, müssen sich beide Schenkel der Spule 100 in separaten, gegenläufig gerichteten Abschnitten 112 und 114 des Magnetfelds 102 befinden. Zwei die Verlustbereiche bildende Abschnitte der Spule 100, in der Darstellung oben und unten gezeigt, erfüllen hier lediglich eine Aufgabe als "Verbindungsstücke" und "Raumteiler". Dabei wird ein Teil der in der Wicklung 100 induzierten Energie bedingt durch Widerstandsverluste in einem die Wicklung 100 bildenden Leiter, z. B. einem Kupferdraht, vernichtet.

Anhand der nachfolgenden Figuren wird der prinzipielle Aufbau eines Induktionsgenerators gemäß Ausführungsbeispielen der vorliegenden Erfindung illustriert. Die in den Figuren beschriebenen exemplarischen Induktionsgeneratoren können insbesondere zum Betrieb eines autarken Funkschalters eingesetzt werden.

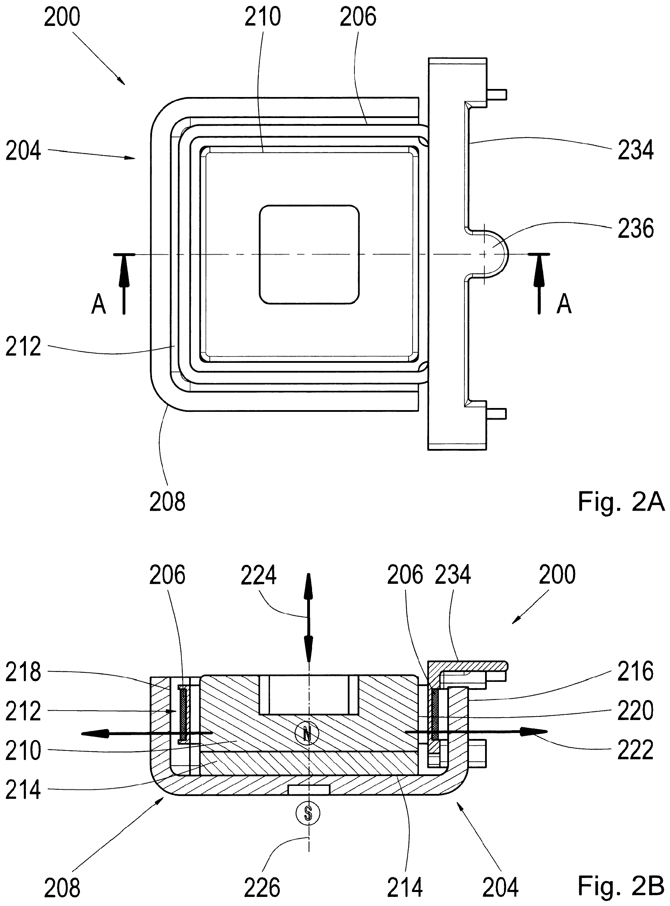

Fig. 2A zeigt eine Prinzipdarstellung eines Induktionsgenerators 200 gemäß einem Ausführungsbeispiel der vorliegenden Erfindung. Der Induktionsgenerator 200 ist in der Draufsicht dargestellt. Gezeigt ist ein Spulenträger 234 zum Trage einer ringförmigen Spule 206, wobei der Spulenträger 234 ein Betätigungselement 236 zum Auslenken der ringförmigen Spule 206 umfasst, sowie eine Magnetanordnung 204, die zum Induzieren einer Spannung in der Spule 206 in Wirkverbindung mit der ringförmigen Spule 206 steht. Zwischen einem ersten Polabschnitt 208 und einem zweiten Polabschnitt 110 der Magnetanordnung 204 verläuft ein Luftkanal 112, der wie die Spule 206 eine Ringform aufweist und die Spule 206 vollumfänglich aufnimmt. Ein Abschnitt des Luftkanals 112 sowie der darin angeordneten Spule 206 ist in der Zeichnung in Fig. 2A durch den Spulenträger 234 verdeckt. Wie die Darstellung zeigt, sind bei dem hier gezeigten Ausführungsbeispiel des Induktionsgenerators 200 sowohl die Magnetanordnung 204 als auch die Spule 206 rechteckig, annähernd quadratisch, ausgebildet.

Fig. 2B zeigt eine Querschnittsansicht des Induktionsgenerators 200 aus Fig. 2A entlang einer Linie A-A in Fig. 2A gemäß einem Ausführungsbeispiel der vorliegenden Erfindung. Hier ist der Aufbau des Induktionsgenerators 200 besonders gut ersichtlich. Der erste Polabschnitt 208 und der zweite Polabschnitt 210 sind hier als zwei unterschiedlich geformte Polschuhe ausgebildet, die an einen zwischen ihnen befindlichen Magneten 214 angrenzend angeordnet sind. Hier bildet der erste Polschuh 208 den Südpol und der zweite Polschuh 210 den Nordpol der Magnetanordnung 204. Wie die Darstellung zeigt, ist ein einen Wandungsabschnitt ausformender umlaufender Außenrandbereich 216 des ersten Polschuhs 208 nach oben umgebogen, sodass der erste Polschuh 208 einen Topf bildet, in dessen Mittelbereich der Magnet 214 und der der zweite Polschuh 210 stapelartig aufeinander angeordnet sind. Der zweite Polschuh 210 ist hier scheibenförmig ausgebildet und deckt sich in seinen Abmessungen mit dem darunter liegenden Magneten 214. Der umlaufende Außenrandbereich 216 des ersten Polschuhs 208 und eine Oberseite des zweiten Polschuhs 210 schließen auf gleicher Höhe ab bzw. formen auf der dem ersten Polschuh 208 abgewandten Oberflächenseite der Magnetanordnung 204 eine gemeinsame Oberfläche aus. Bei dem in Fig. 2B gezeigten Ausführungsbeispiel des Induktionsgenerators 200 bildet der umgebogene umlaufende Wandungsabschnitt 216 des ersten Polabschnitts 208 eine Außenwand 218 des Luftkanals 212. Eine Seitenfläche des zweiten Polschuhs 210 bildet eine Innenwand 220 des Luftkanals 212. Entgegengerichtete Pfeile kennzeichnen einen magnetischen Fluss 222 eines zwischen dem ersten Polabschnitt 208 und dem zweiten Polabschnitt 210 bestehenden torusförmigen Magnetfeldkreises des durch die Magnetanordnung 204 gebildeten Dauermagnetfelds. Entsprechend der Polung der Magnetanordnung 204 bei dem in Fig. 2B gezeigten Ausführungsbeispiel des Induktionsgenerators 200 quert der magnetische Fluss 222 hier den Luftkanal 212 von innen nach außen, wie es durch die Pfeile gekennzeichnet ist, zumindest annähernd parallel zu einem Bodenabschnitt des ersten Polschuhs 208 und zumindest annähernd parallel zu einer Wicklungsebene der Spule 206, wenn sich die Spule 206 im Ruhezustand befindet. Mittels eines Federelements, auf das in den nachfolgenden Figuren noch detaillierter eingegangen wird, ist die Spule 206 schwingend in dem Luftspalt bzw. Luftkanal 212 gelagert. Die Spule 206 führt nach einer Betätigung des Betätigungselements 236 der Spule 206 eine durch einen Doppelpfeil gekennzeichnete oszillierende Relativbewegung bzw. Oszillationsbewegung 224 entlang einer durch eine Strichlinie gekennzeichneten Mittelachse 226 der Spule 206 aus, um unter Ausnutzung der Lorentz-Kraft einen elektrischen Stromfluss in der Wicklung der Spule 206 zu erzeugen.

Wie bereits erwähnt, ist das durch die Magnetanordnung 204 gebildete Magnetsystem des Induktionsgenerators 200 statisch aufgebaut und besteht im Wesentlichen aus dem Magneten 214, der zwischen dem topfförmigen ersten Polschuh 208 und dem scheibenförmigen zweiten Polschuh 210 platziert ist. Die durch den umgebogenen Randbereich 216 gebildeten senkrechten Schenkel des topfförmigen Polschuhs 208 strecken sich bis zu der Oberkante des scheibenförmigen zweiten Polschuhs 210, sodass zwischen den Polschuhen 208, 210 der Luftspalt bzw. Luftkanal 212 gebildet wird. Durch den Luftspalt 212 schließt sich der Magnetkreis und bildet im Luftspalt 212 ein permanentes Magnetfeld, das während des Betriebs des Induktionsgenerators 200 keine Richtungsumkehr erfährt. Der Luftspalt 212 bzw. das Magnetsystem kann rund, viereckig quadratisch usw. aufgebaut werden. Im in den Figuren 2A und 2B gezeigten Beispiel wurde das Magnetsystem aus konstruktiven bzw. wirtschaftlichen Überlegungen quadratisch aufgebaut. Der Aufbau des Induktionsgenerators 200 ist nicht auf die quadratische Form festgelegt. Der Induktionsgenerator 200 kann im Bedarfsfall jegliche Form wie beispielsweise dreieckig, rechteckig oder vieleckig sowie kreisförmig oder oval annehmen.

In dem Luftspalt 212 befindet sich die leichte viereckige Wicklung bzw. Spule 206 ohne Eisenkern. Die elektrische Leitung oder die elektrischen Leitungen der Spule 206 umringen den zweiten Polschuh 210. Die Spule 206 ist beweglich gelagert und kann die Relativbewegung 224 entlang des Luftspaltes 212 nach oben und unten absolvieren. Da sich die Wicklung 206 quasi mit ganzer Länge in dem Magnetfeld zwischen dem ersten Polschuh 208 und dem zweiten Polschuh 210 befindet, werden die Widerstandsverluste in der Wicklung 206, im Vergleich zu dem Stand der Technik, bis auf ein Minimum reduziert. Damit kann eine weitere Erhöhung des Wirkungsgrades und eine Minimierung des Bauraumes erzielt werden.

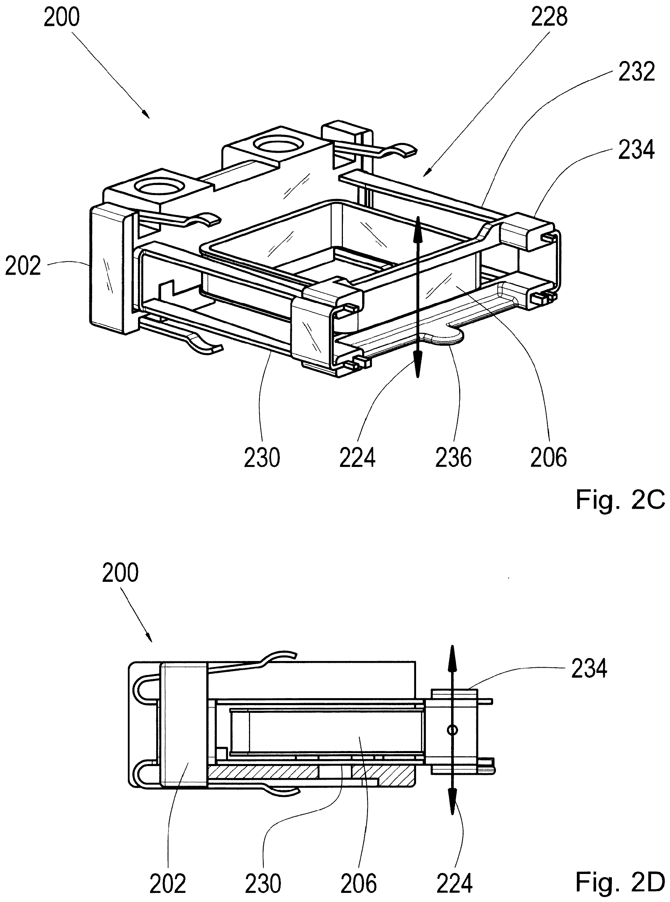

Fig. 2C zeigt eine detailliertere Ansicht des Induktionsgenerators 200 aus den Figuren 1A und 1B in perspektivischer Darstellung gemäß einem Ausführungsbeispiel der vorliegenden Erfindung. Hier ist ein Federelement 228, über das die Spule 206 bewegbar in dem Luftkanal 212 gelagert ist, gut zu erkennen. Bei dem hier gezeigten Ausführungsbeispiel des Induktionsgenerators 200 ist das Federelement 228 in Form zweier "Feder-Parallelogramme", die gemeinsam quasi ein "Doppelparallelogramm" bilden, ausgeführt. Wie die Darstellung zeigt, wird das Doppelparallelogramm durch eine erste Doppelflachfeder 230 und eine zu der ersten Doppelflachfeder 230 parallel verlaufende zweite Doppelflachfeder 232 gebildet, zwischen denen die Spule 206 angeordnet ist. Die erste und die zweite Doppelflachfeder 230, 232 setzen sich jeweils aus zwei Flachbiegefedern zusammen, welche wiederum zueinander parallel verlaufen. Ein erster Endbereich des Federelements 228 ist im Gehäuse bzw. in einer Trägerstruktur 202 fixiert, und ein dem ersten Endbereich gegenüberliegender weiterer Endbereich des Federelements 228 ist an einem Spulenkörper bzw. dem Spulenträger 234 befestigt. Dank einer solchen Anordnung in Form eines Parallelogramms können sich die erste Doppelflachfeder 230 und die zweite Doppelflachfeder 232 in beide Richtungen der Oszillationsbewegung 224 parallel verformen, sodass die Spule 206 in einer quasi Parallelbewegung die Relativbewegung der Oszillation 224 absolvieren und somit einen sehr guten Schwingkörper mit vier Flachfedern bilden kann.

Gemäß diesem Ausführungsbeispiels sind die an der Trägerstruktur 202 befestigten Enden der Doppelflachfedern 230, 232 durch die Trägerstruktur 202 hindurchgeführt und die über die Trägerstruktur 202 hinausstehenden freien Endabschnitte dieser Enden sind u-förmig umgebogen und können beispielsweise als elektrische Kontakte verwendet werden, beispielsweise zur Energieversorgung eines Funkmoduls oder einer anderen elektrischen Schaltung, die durch den Betrieb des Induktionsgenerators 200 mit elektrischer Energie versorgt werden kann.

Über das Gehäuse bzw. die Trägerstruktur 202 kann der Induktionsgenerator 200 an einem Objekt, beispielsweise einer Wand befestigt werden. Dazu können geeignete Fixierelemente, beispielsweise Schrauben verwendet werden. Während der Oszillation 224 bewegt sich die Spule 206, während sich die Trägerstruktur 202, die Magnetanordnung 204 sowie der durch die Magnetanordnung bewirkte Magnetkreis in Ruhe befinden. Ist der Induktionsgenerator 200 an einem Objekt befestigt, so führt die Spule 206 während der Oszillation 224 eine Bewegung aus, während sich die Trägerstruktur 202, die Magnetanordnung 204 sowie der durch die Magnetanordnung bewirkte Magnetkreis und das Objekt in Ruhe befinden.

Ein wesentlicher Vorteil des in Fig. 2C anschaulich dargestellten Konzepts ist, dass mechanische Verluste nur aus der inneren Reibung in den einzelnen Federn - die fast vernachlässigbar ist - und aus dem Luftwiderstand während des Oszillierens der Spule 206 resultieren.

Da die erste Doppelflachfeder 230 und die zweite Doppelflachfeder 232 zueinander elektrisch isoliert sind, können sie gleichzeitig für Stromabnahmezwecke bzw. für einen elektrischen Anschluss der Spule 206 verwendet werden. Enddrähte der Spule 206 können sowohl direkt als auch indirekt mittels Zusatzkontaktstiften an die weiteren Federenden kontaktiert werden. Die Federenden des ersten Endbereichs können als Federkontakte ein- oder beidseitig ausgeführt sein und die Kontaktierung an ein beliebiges Elektronikmodul extrem einfach und kostengünstig ermöglichen.

Die Darstellung in Fig. 2C zeigt ferner das an dem Spulenträger 234 ausgebildete Betätigungselement 236 des Induktionsgenerators 200. Mittels des hier zungenförmig ausgebildeten Betätigungselements 236 kann die Spule 206 ausgelenkt und mit Unterstützung des Federelements 228 in dem Dauermagnetfeld des Induktionsgenerators 200 in Schwingung versetzt werden, um unter Ausnutzung der Lorentz-Kraft elektrischen Strom zu erzeugen.

Die Lagerung der Spule 206 mittels des Doppelparallelogramms 228 ist zwar vorteilhaft, jedoch nicht zwingend erforderlich. Die Spule 206 kann z. B. auch mittels einer einfachen Blattfeder oder Membrane schwingend gelagert werden. Es ist auch eine einfache lineare Lagerung in der Kombination mit Biege-, Zug- oder Druckfedern möglich. Zur Stromabnahme können dabei die Doppelflachfedern 230, 232, flexible Folien, Schleifkontakte oder Drähte verwendet werden.

In Fig. 2D ist der Aufbau des Induktionsgenerators 200 in einer Seitenansicht gemäß einem Ausführungsbeispiel der vorliegenden Erfindung gezeigt. Aufgrund der Lagerung der Spule 106 kann die Oszillation 224 zumindest annähernd durch einander entgegengesetzte Linearbewegungen gekennzeichnet sein. Alternativ kann die Oszillation 224 einen leicht rotatorischen Verlauf aufweisen.

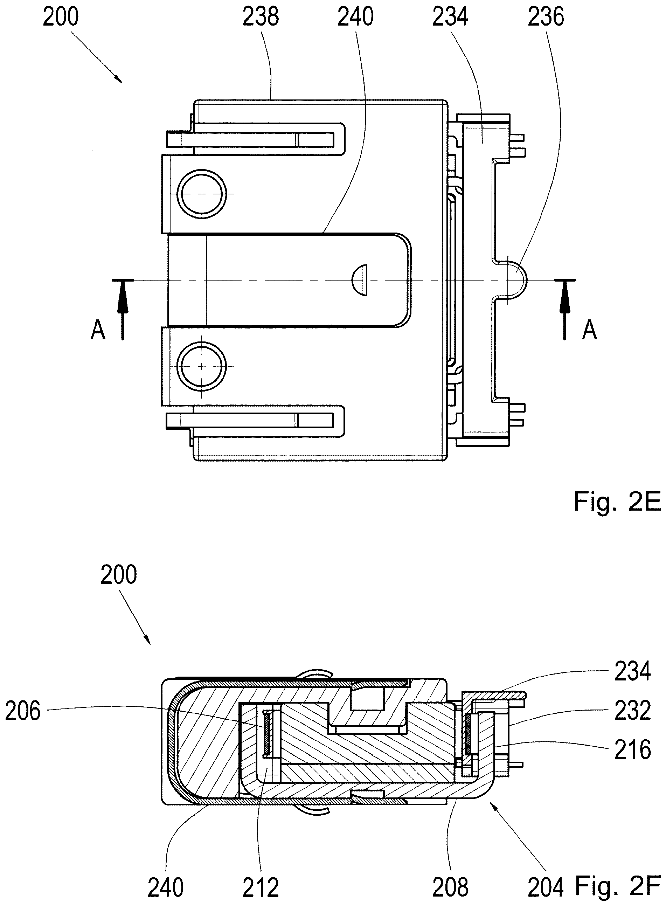

Fig. 2E zeigt anhand einer Draufsicht den fertig montierten Induktionsgenerator 200 gemäß einem Ausführungsbeispiel der vorliegenden Erfindung. Die in den vorhergehenden Figuren erläuterte Anordnung aus Magnetsystem und Oszillationssystem ist nun in einem schützenden Gehäuse 238 untergebracht. Eine Befestigungsklammer 240 wird eingesetzt, damit alle zur Stromerzeugung erforderlichen Elemente des Induktionsgenerators 200 auch unter Belastung optimal zueinander positioniert bleiben und eine fehlerfreie Funktion des Induktionsgenerators 200 gewährleistet werden kann.

Fig. 2F zeigt den fertig montierten Induktionsgenerator 200 in einem Querschnitt entlang einer Linie A-A in der Fig. 2E gemäß einem Ausführungsbeispiel der vorliegenden Erfindung. Hier ist gut zu erkennen, dass die Befestigungsklammer 240 geeignet ist, die statische Fixierung der Magnetanordnung 204 zu unterstützen, während die mittels des Spulenträgers 234 in dem Luftkanal 212 positionierte Spule 206 frei in diesem oszillieren kann.

Wie die Darstellungen in den Figuren zeigen, ist der Induktionsgenerator 200 in einer flachen, kompakten Bauweise konzipiert.

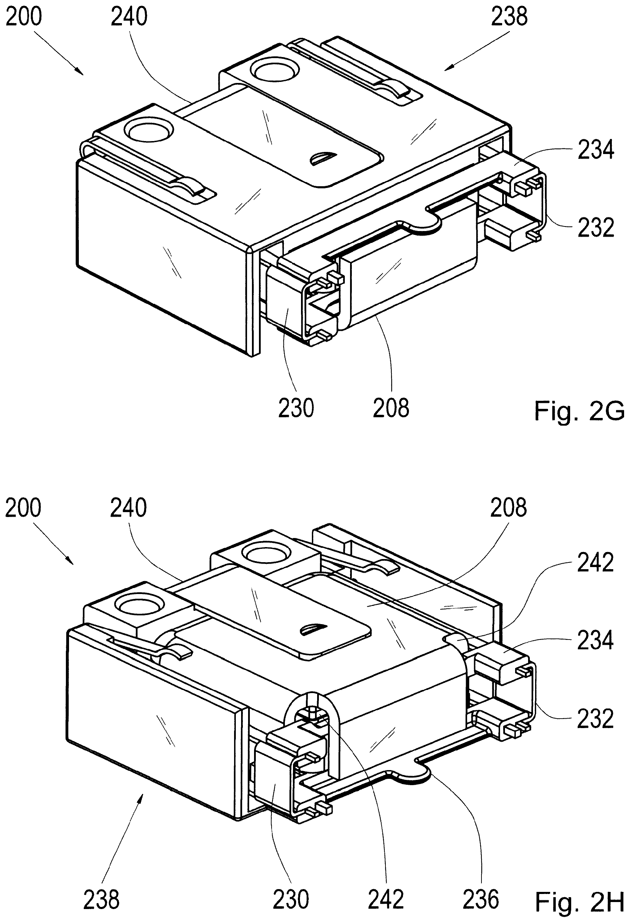

Fig. 2G zeigt den so konzipierten Induktionsgenerator 200 in einer perspektivischen Draufsicht gemäß einem Ausführungsbeispiel der vorliegenden Erfindung.

Fig. 2H zeigt den Induktionsgenerator 200 in einer perspektivischen Untersicht gemäß einem Ausführungsbeispiel der vorliegenden Erfindung. Gemäß diesem Ausführungsbeispiel bildet der umlaufende Außenrandbereich 216 des ersten Polabschnitts 208 keine umlaufend geschlossene Außenwand des Luftkanals, in dem die Spule oszillieren kann. Stattdessen weist der Außenrandbereich 216 des ersten Polabschnitts 208 an den Ecken Schlitze 242 auf, die sich bis zum Boden des durch den ersten 208 und zweiten Polabschnitt 210 gebildeten Luftkanals erstrecken. Somit ist die Außenwand des Luftkanals durch Schlitze 242 unterbrochen, die sich im Bereich der Ecken der rechteckig gewickelten Spule 206 befinden. Durch die Schlitze 242 ragen freie Enden des Spulenträgers 234 heraus, wobei die freien Enden des Spulenträgers 234 mit den freien Enden der ersten 230 und zweiten Doppelflachfeder 232 verbunden sind. Dadurch kann die Spule 206 vollumfänglich von dem topfförmigen ersten Polabschnitt 208 aufgenommen und geschützt werden. Die Lagerung und Betätigung der Spule 206 erfolgt über die außerhalb des ersten Polabschnitts 208 angeordneten Lagerungs- und Betätigungselemente, im Einzelnen über die sich außerhalb des ersten Polabschnitts 208 von der Trägerstruktur 202 bis zum Spulenträger 234 erstreckenden Doppelflachfedern 230, 232 und über das den ersten Polabschnitt 208 seitlich überragende Betätigungselement 236.

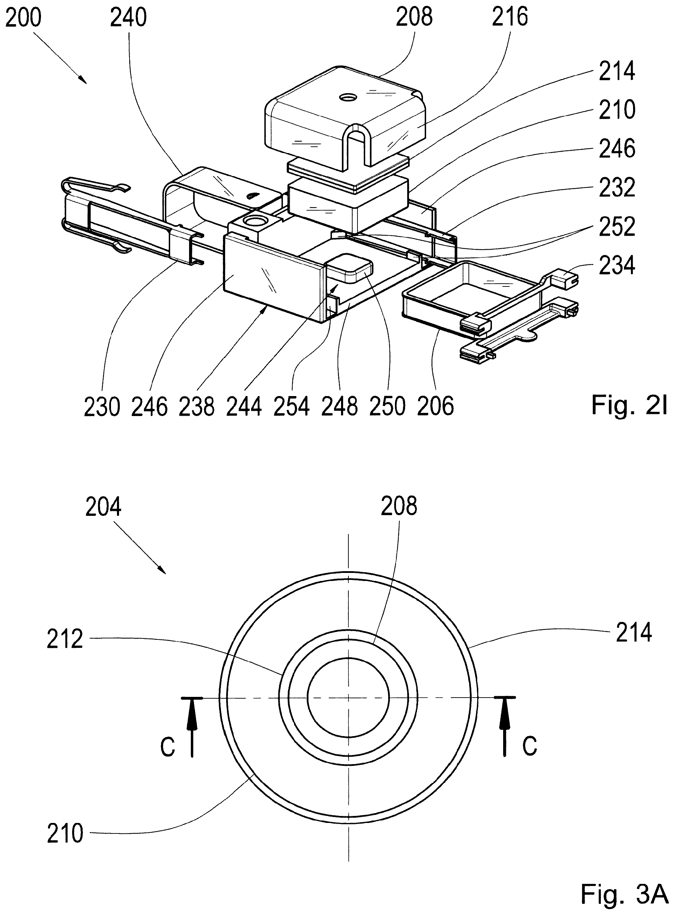

Fig. 2I zeigt eine Explosionsdarstellung des Induktionsgenerators 200 gemäß einem Ausführungsbeispiel der vorliegenden Erfindung. Die Darstellung zeigt, dass die Montage des Induktionsgenerators 200 relativ einfach durchzuführen ist. Die Einzelteile 206, 208, 210, 214, 230, 232, 234 werden in das Gehäuse 238 zugefügt und anschließend mithilfe der Befestigungsklammer 240 fixiert. Da der Magnet 214 von den Polschuhen 208, 210 vollständig umschlossen ist, bleibt er auch gegen starke Magnetfelder sowie mechanische und thermische Beanspruchungen gut geschützt.

Das Gehäuse 238 formt eine zweiseitig offene rechteckige Wanne aus, wobei der Wanneninnenbereich 244 einen Aufnahmebereich zur Aufnahme der Magnetanordnung 204 und der Spule 206 ausbildet. Mit anderen Worten wird der Aufnahmebereich 244 seitlich durch drei zueinander rechtwinklig angeordnete Seitenwände 246, die eine umlaufende Gehäusewand ausformen, und durch einen die Seitenwände 246 miteinander verbindenden Gehäuseboden 248 begrenzt. Der Gehäuseboden 248 umfasst auf seiner dem Aufnahmebereich 244 zugewandten Oberflächenseite eine Positionier- und Halteeinrichtung 250, 252 zum Positionieren und Halten der Magnetanordnung 204, insbesondere zum Ausrichten und Halten des zweiten Polabschnitts 210 und des ersten Polabschnitts 208 in einem montierten Zustand des Induktionsgenerators 200. Im Einzelnen umfasst die Positionier- und Halteeinrichtung einen auf dem Gehäuseboden 248 mittig angeordneten Vorsprung 250, der in eine mit dem zweiten Polabschnitt 210 entsprechend ausgestaltete Aussparung eingreift. Die Außenmaße des Vorsprungs 250 sowie die Innenmaße der Aussparung sind aufeinander derart abgestimmt, dass der Eingriff möglichst spielfrei erfolgt, wobei toleranzbedingt ein gewisses Spiel zwischen diesen Elementen möglich sein kann. Bei diesem bevorzugten Ausführungsbeispiel ist der Vorsprung 250 quadratisch. Der Vorsprung 250 kann alternativ jede andere zum Eingriff geeignete Form aufweisen. Der Positionier- und Halteeinrichtung sind ferner vier weitere Vorsprünge 252 zugeordnet, wobei die weiteren Vorsprünge 252 auf dem Gehäuseboden 248 derart angeordnet sind, dass der topfförmige erste Polabschnitt 208 im montierten Zustand mit seiner Außenseite an den Innenseiten der weitere Vorsprünge 252 zur Anlage kommt. Die Anlage erfolgt gleichfalls wie der vorbeschriebene Eingriff möglichst spielfrei. Dementsprechend sind die Außenmaße des ersten Polschuhs 208 und der Abstand der weiteren Vorsprünge 252 zueinander angepasst. Mittels der Positionier- und Halteeinrichtung kann die Magnetanordnung 204 zuverlässig positioniert und in Richtung zur Gehäusewand 246 sicher gehalten werden.

Die von zwei Seitenwänden 246 eingefasste mittige Gehäusewand 246 umfasst in den Eckbereichen zu den benachbarten Seitenwänden 246 jeweils einen Durchgang, durch welchen die freien Enden der ersten 230 bzw. zweiten Doppelflachfeder 232 bei der Montage hindurchgeführt werden. Der Gehäuseboden 248 weist eine spielbehaftete Federaufnahme 254 zum Aufnehmen des zwischen den Enden der Doppelflachfedern 230, 232 liegenden Mittenbereiches dieser auf. Die Federaufnahme 254 ist jeweils in Verlängerung des Durchganges ausgestaltet und wird seitlich durch die Gehäusewand 246 sowie durch zwei der weiteren Vorsprünge 252, die der Gehäusewand 246 gegenüberliegen, begrenzt. Die Federaufnahme 254 ist mittels einer Vertiefung in dem Gehäuseboden 248 ausgeformt und weist Innenmaße zum ungehinderten Schwingen der Doppelflachfedern 230, 232 bzw. zum ungehinderten Oszillieren der Spule 206 nach Betätigung der selbigen über die Betätigungselement 236 auf. Mit anderen Worten sind die Doppelflachfedern 230, 232 in der jeweiligen Federaufnahme 254 wenigstens in Oszillationsrichtung der Spule 206 frei beweglich angeordnet. Dabei können die angrenzende Gehäusewand 246 sowie die zwei weiteren Vorsprünge 252 eine Führung für die Doppelflachfedern 230, 232 in Oszillationsrichtung ausbilden, damit eine zu der Oszillationsrichtung kreuzende Bewegung der Doppelflachfedern 230, 232 und damit der Spule 206 unterdrückt werden kann.

Im Folgenden wird auf eine Funktionsweise des in den Figuren 2A bis 2I gezeigten Induktionsgenerators 200 eingegangen.

Zur Betätigung des Generators 200 wird die Betätigungszunge 236 des Spulenträgers 234 von einem Betätiger erfasst, in eine der beiden Richtungen der Relativbewegung 224 bis auf einen bestimmten Weg oder zu einer bestimmten Kraft ausgelenkt und schlagartig freigelassen. Die Spule 206 beginnt im konstanten Magnetfeld zu schwingen, und es wird nach dem Lorentz-Gesetz elektrische Energie in dieser induziert, welche durch die beiden Doppelflachfedern 230, 232 zur Versorgung eines Sendemodules abgenommen wird. Bedingt durch die Gegeninduktion nimmt eine Schwingamplitude der Spule 206 abhängig von einer Verbraucherleistung ab, bis der Spulenträger 234 zu Ruhe kommt. Durch eine Federkonstante des Federelements 228 und ein Gewicht der Spule 206 lässt sich die Impulslänge steuern. Verluste entstehen hier im Wesentlichen nur aus dem Luftwiderstand während des Oszillierens. Mit diesem Konzept erzielbare Wirkungsgrade liegen zwischen 75 und 90 %. Der Eisenkreis des Magnetsystems des Energiewandlers 200 wird im Gegensatz zu herkömmlichen Systemen nur in einem Teilbereich der Magnethysterese genutzt und stellt somit keine hohe Ansprüche an die magnetischen Eigenschaften und senkt die Systemkosten erheblich. Der Induktionsgenerator 200 erzeugt einen Wechselstrom. Es ist möglich, die Polarität z. B. des ersten Halbsinus zu messen und für die Richtungserkennung zu nutzen. Somit kann z. B. ein "An"- und ein "Aus"-Signal generiert und versendet werden, in Abhängigkeit von der Betätigungsrichtung des Generators 200, und zwar ohne zusätzliche Kodier-Kontakte.

Wie bereits erwähnt und die nachfolgenden Figuren zeigen, kann das Magnetsystem des Energiewandlers 200 auf unterschiedliche Weise aufgebaut sein. Insbesondere kann die Form des Luftkanals und damit die Form der Spule variiert werden.

Fig. 3A zeigt eine Draufsicht auf ein Magnetsystem eines Induktionsgenerators gemäß einem weiteren Ausführungsbeispiel der vorliegenden Erfindung. Das Magnetsystem wird durch eine Magnetanordnung 204 gebildet. Im Gegensatz zu dem anhand der Figuren 2A bis 2I beschriebenen beispielhaften Induktionsgenerator, bei dem ein flacher Quadermagnet platzsparend innerhalb der Spule angeordnet ist, wird hier als Magnet der Magnetanordnung 204 ein Ringmagnet eingesetzt. Auch hier sind der erste Polabschnitt 208, der Magnet 214 und der zweite Polabschnitt 210 stapelartig aufeinander angeordnet, um den Luftkanal 212 zwischen dem ersten Polabschnitt 208 und dem zweiten Polabschnitt 210 zu bilden. Die Polabschnitte 208, 210 sind als an den Magneten angrenzende Polschuhe ausgeführt. Die übrigen Elemente des Induktionsgenerators können wie bereits beschrieben ausgeführt sein, oder an die runde Bauform des Magnetsystems angepasst sein.

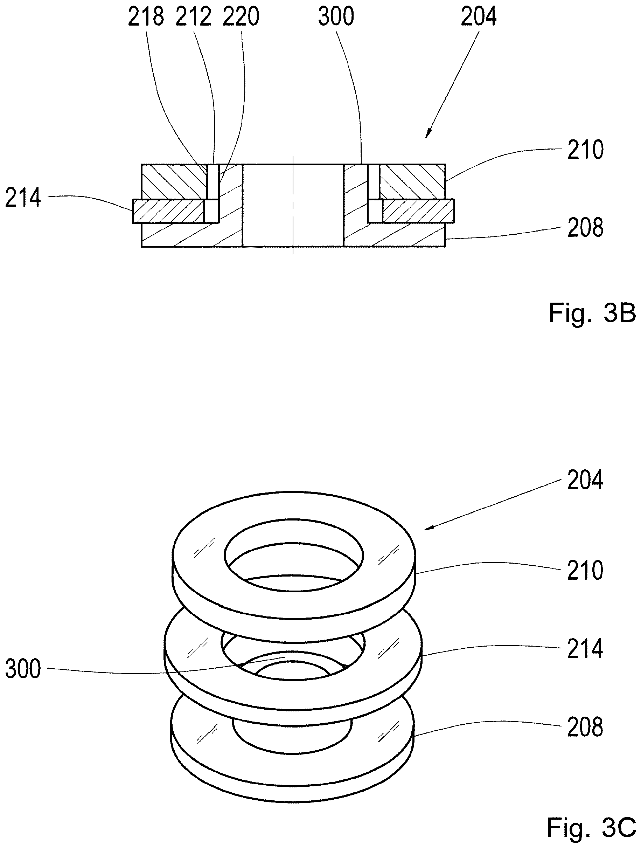

Fig. 3B zeigt eine Querschnittsansicht des in Fig. 3A gezeigten Magnetsystems entlang einer Linie C-C in der Fig. 3A gemäß einem Ausführungsbeispiel der vorliegenden Erfindung.

Wie die Darstellung zeigt, bildet auch hier der erste Polschuh 208 eine Basis der Magnetanordnung 204. Im Unterschied zu dem weiter oben erläuterten Ausführungsbeispiel ist jedoch hier ein zylinderartiger Mittenbereich 300 mit einer von dem Mittenbereich 300 seitlich abragenden Aufnahmefläche vorgesehen, sodass der erste Polschuh 208 eine nabenartige Ringaufnahme bildet, auf die der ringförmige Magnet 214 und der der zweite Polschuh 210 aufgesteckt sind. Der zweite Polschuh 210 ist wiederum scheiben- bzw. ringförmig ausgebildet und bildet einen Deckel des Magnetsystems. Der zylinderartige Mittenbereich 300 des ersten Polschuhs 208 und die Oberseite des zweiten Polschuhs 210 schließen auf gleicher Höhe ab. Mit anderen Worten weist der Mittenbereich 300 ausgehend von der seitlich abragenden Aufnahmefläche eine der Materialstärke des Magneten 214 und des zweiten Polschuhs 210 entsprechende Höhe auf. Bei dem in Fig. 3B gezeigten Ausführungsbeispiel des Induktionsgenerators bildet eine radiale Außenfläche des Mittenbereichs 300 des ersten Polschuhs 208 die Innenwand 220 des Luftkanals 212 und die Seitenfläche bzw. die radiale Seiteninnenfläche des zweiten Polschuhs 210 die Außenwand 218 des Luftkanals 212.

Fig. 3c zeigt eine Explosionsdarstellung des Magnetsystems aus den Figuren 3A und 3B gemäß einem Ausführungsbeispiel der vorliegenden Erfindung. Hier ist die ringförmige Form des Magneten 214 sowie des zweiten Polschuhs 210 dargestellt.

Die anhand der Figuren 3A bis 3C vorgestellte Ausführungsform des Induktionsgenerators bietet sich an, wenn ein Platzbedarf für den Induktionsgenerator nicht so stark eingeschränkt ist. In einem solchen Fall kann das Magnetsystem des Induktionsgenerators mit dem in den Figuren 3A bis 3C beschriebenen Ringmagneten aufgebaut werden, bei dem kostengünstige Magneten, z. B. Ferritmagneten, Verwendung finden können.

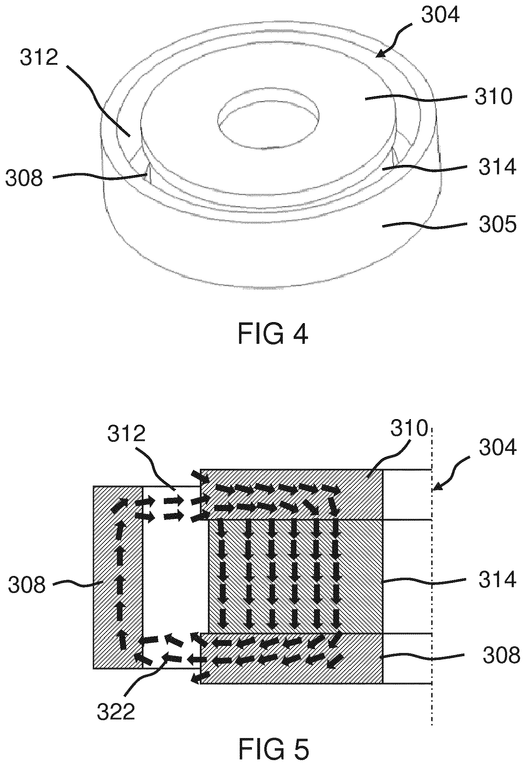

Fig. 4 zeigt eine perspektivische Draufsicht eines Magnetsystems eines Induktionsgenerators 301 gemäß einem weiteren Ausführungsbeispiel. Wie das in Fig. 3A gezeigte Magnetsystem wird das in Fig. 4 dargestellte Magnetsystem durch eine Magnetanordnung 304 gebildet. Die Magnetanordnung 304 weist einen Ringmagneten aus einem ersten Polabschnitt 308, einen Magneten 314 und einen zweiten Polabschnitt 314 auf, wobei diese Komponenten stapelartig aufeinander angeordnet sind. Die Polabschnitte 308, 310 sind als an den Magneten 314 angrenzende Polschuhe ausgeführt. Zusätzlich ist ein ringförmiger Magnetflussleiter 305 vorgesehen, der die Magnetanordnung 304 beabstandet einfasst, wodurch zwischen der Magnetanordnung 304 und dem Magnetflussleiter 305 der Luftkanal 312 ausgebildet ist. Der Magnetflussleiter 305 weist in einer parallel zu der Stapelanordnung der Magnetanordnung 304 verlaufenden Richtung ein zu der Magnetanordnung 304 kleineres Ausmaß auf. Der Magnetflussleiter 305 bildet dabei eine Außenwand des Luftkanals 312 aus, wohingegen die Magnetanordnung 304 eine Innenwand des Luftkanals 312 ausformt. Diese Anordnung bietet einen möglichst geringen Bauraumverlust.

Alternativ zu dem in Fig. 4 dargestelltem Magnetsystem kann die Anordnung von Magnetanordnung und Magnetflussleiter vertauscht sein, wobei der ringförmige Magnetflussleiter von einer ringförmigen Magnetanordnung mit einer wie vorbeschriebenen Stapelanordnung von Polabschnitten und Magnet eingefasst wäre. Dabei bildet die Magnetanordnung eine Außenwand des Luftkanals aus, während der Magnetflussleiter eine Innenwand des Luftkanals ausformt.

Fig. 5 zeigt einen Ausschnitt einer Querschnittsansicht des Magnetsystems aus Fig. 4. Der Magnetflussleiter 305 ist eingerichtet, einen magnetischen Fluss 322 des von der Magnetanordnung 304 erzeugten Dauermagnetfeldes in einem Endbereich aufzunehmen, zu einem gegenüberliegenden Endbereich zu leiten und in Richtung der Magnetanordnung 304 wieder abzugeben. Der magnetische Fluss 322 des Dauermagnetfeldes kann so zwischen den Polabschnitten 308, 310 geleitet werden, wobei in dem Luftkanal 312 in den Bereichen zwischen dem Magnetflussleiter 305 und den jeweiligen Polabschnitten 308, 310 eine hohe magnetische Flussdichte und in einem Bereich dazwischen eine geringe magnetische Flussdichte vorherrscht.

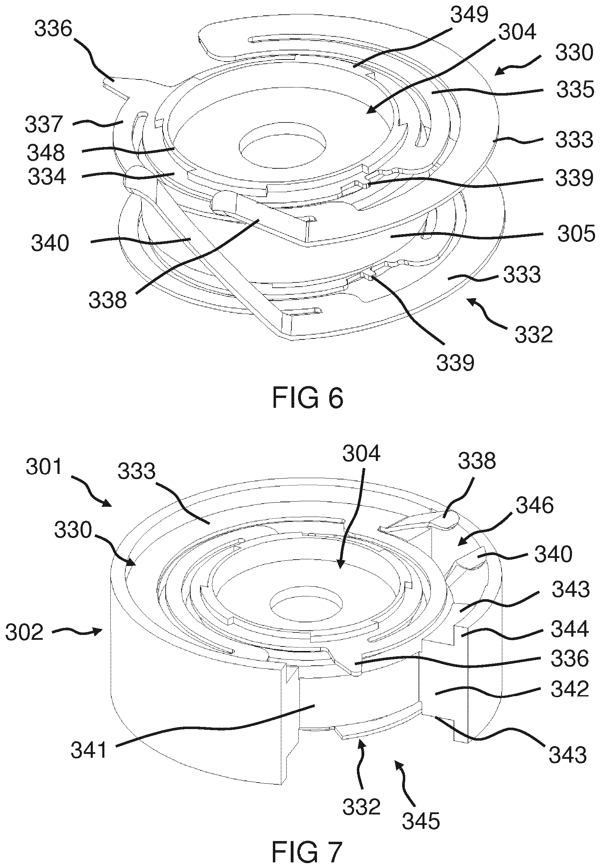

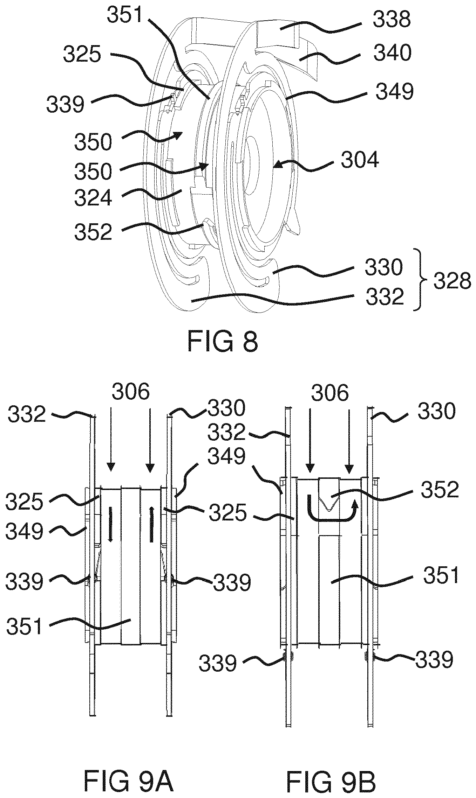

Fig. 6 zeigt eine perspektivische Draufsicht eines das Magnetsystem aus Fig. 4 einfassende Spulenschwingsystems. Das Spulenschwingsystem umfasst einen zylinderartigen Spulenträger 324, auf dem zwei voneinander beabstandete ringförmige Spulenwicklungen mittels eines Wickelkörpers wie einem Spulenwickeldraht gewickelt sind (Fig. 9A), wobei die Spulenwicklungen elektrisch miteinander verbunden sind und die Spule 306 ausbilden. Der zylindrische Spulenträger 324 weist einen Innendurchmesser eingerichtet zur Aufnahme der Magnetanordnung 304 auf. Der Spulenträger 324 kann zwei- oder mehrteilig als zusammensetzbares Element ausgeformt sein, um ein Befestigen der jeweiligen Flachbiegefeder 330; 332 auf dem Spulenträger 324 zu ermöglichen. Dazu weist der Spulenträger 324 an den stirnseitigen Enden ein Innengewinde auf, in welches ein zylindrisches Halteelement 348 einschraubbar ist. Das zylindrische Halteelement 348 weist mehrere umfänglich angeordnete Haltevorsprünge 349 zur Anlage mit einem Haltebereich 334 eines aus zwei Flachbiegefedern 330, 332 bestehenden Federelementes 328 auf. Der Spulenträger 324 weist an seinem jeweiligen stirnseitigen Ende gleichfalls Haltevorsprünge 325 zur Anlage mit dem Haltebereich 334 auf (Fig. 8A). Der Haltebereich 334 der Flachbiegefeder 330; 332 ist in einem eingeschraubten Zustand des Halteelements 348 zwischen den Haltevorsprüngen 325, 349 des Spulenträgers 324 und des Halteelements 348 eingeklemmt und dadurch an dem Spulenträger 324 befestigt.

Alternativ dazu kann der Spulenträger 324 in einem nicht dargestellten bevorzugten Ausführungsbeispiel ein in Umfangsrichtung verlaufenden Trennabschnitt aufweisen, mittels welchem der Spulenträger 324 quer zu seiner Umfangsrichtung trenn- und zusammensetzbar ist. Der Trennabschnitt wird durch wenigstens zwei miteinander verbindbare und lösbare Spulenträgerkanten ausgeformt. So kann der Spulenträger 324 mehrteilig ausgebildet sein, wobei jeder der Spulenträgerteile eine der Spulenträgerkanten aufweist.

Alternativ dazu kann der Spulenträger 324 in einem weiteren nicht dargestellten bevorzugten Ausführungsbeispiel einteilig ausgebildet sein, wobei der Trennabschnitt quer zu seiner Umfangsrichtung verläuft, um den Spulenträger 324 in Umfangsrichtung trennen und zusammensetzen zu können. Die Spulenträgerkanten werden dabei durch die in Umfangsrichtung vorhandenen Stirnkanten des Spulenträgers 324 ausgebildet. Zusätzlich kann der Spulenträger 324 aus einem elastischen Material ausgebildet sein, um den Durchmesser des Spulenträgers 324 nach dem Trennen soweit reduzieren zu können, dass ein Aufschieben der jeweiligen Flachbiegefeder 330; 332 auf den Spulenträger 324 möglich ist.

Ferner kann der ein- oder mehrteilig ausgeformte Spulenträger 324 im Bereich des Trennabschnitts Befestigungselemente aufweisen, um ein versehentliches Trennen im Bereich des Trennabschnitts zu verhindern. Die Befestigungselemente können durch Eingreifmittel ausgeformt sein, wobei die Eingreifmittel in die zu befestigende Trennkante eingreifen. Weiterhin können die Eingreifmittel Rastmittel zum miteinander Verrasten der jeweiligen Trennkanten ausformen, wobei die Eingreifmittel ferner Haltemittel wie beispielsweise Halte- oder Rastnasen oder ein Gewinde zum gegenseitigen Halten der Trennkanten in Trennrichtung aufweisen. Der Spulenträger 324 kann aus einem kunststoffhaltigen Material ausgeformt sein.

Der Spulenträger 324 weist ferner eine solche Dicke in radialer Richtung auf, dass der zylindrische Körper des Spulenträgers 324 mit der darauf gewickelten Spule 306 in dem Luftkanal 312 anordbar ist, wobei jede der beiden Spulenwicklungen der Spule 306 einem der Polabschnitte 308, 310 gegenüberliegt.

Das mit dem Spulenträger 324 befestigbare Federelement 328 weist die Flachbiegefedern 330, 332 auf, welche von der Grundform annähernd identisch ausgebildet sind. Jede der Flachbiegefedern 330; 332 ist aus einer Grundform einer Blattfeder ausgeformt. Die Flachbiegefedern 330; 332 umfassen jeweils einen halbkreisförmigen Auflagerand 333 und einen damit verbundenen kreisförmigen Haltebereich 334 zum Halten des Spulenträgers 324. Der Haltebereich 334 liegt dabei an den Haltevorsprüngen 325 an, wodurch ein Abrutschen der Flachbiegefeder 330; 332 von dem Spulenträger 324 verhindert wird. Der Auflagerand 333 ist über zwei kreissegmentartige Federarme 335, 337 mit dem Haltebereich 334 verbunden. Der erste Federarm 335 erstreckt sich kreissegmentartig von einem längsseitigen Ende des Auflagerandes 333 zu einem innerhalb des halbkreisförmigen Auflagerands 333 liegenden Abschnitts des Haltebereichs 334. Der zweite Federarm 337 erstreckt sich kreissegmentartig von dem anderen längsseitigen Ende des Auflagerandes 333 zu einem außerhalb des halbkreisförmigen Auflagerands 333 liegenden Abschnitts des Haltebereichs 334, wobei der außen liegende Anschlusspunkt des zweiten Federarms 337 dem innen liegenden Anschlusspunkt des ersten Federarms 335 gegenüberliegt. Dadurch wird der Haltebereich 334 mit dem Spulenträger 324 koaxial zu dem halbkreisförmigen Auflagerand 333 gehalten, wobei der Haltebereich 334 mit dem Spulenträger 324 relativ zu dem Auflagerand 333 parallel zu einer Längsachse des Spulenträgers 324 frei schwingen kann.

Die erste Flachbiegefeder 330 weist in einem der Endbereiche des Auflagerandes 333 ein erstes Kontaktelement 338 auf. Das Kontaktelement 338 setzt sich von einem längsseitigen Ende des Auflagerandes 333 fort und ragt von einer die Grundform der ersten Flachbiegefeder 330 umfassenden Ebene ab. Das freie Ende des Kontaktelements 338 bildet einen Schleifkontakt aus. Dazu ist das freie Ende des Kontaktelementes 338 leicht gewölbt, wobei die von der ersten Flachbiegefeder 330 wegweisende Wölbung einen Schleifkontaktpunkt, -linie oder -fläche ausformt. Die erste Flachbiegefeder 330 wird somit als elektrischer Leiter zum Leiten einer von dem Spulenschwingsystem erzeugten Energie verwendet. Dazu ist die erste Flachbiegefeder 330 mittels einer Anschlussstelle 339 mit der Spule 306 elektrisch verbundn. Die Anschlussstelle 339 ist zwischen dem Anschlusspunkt des ersten Federarmes 335 an dem Haltebereich 334 und dem längsseitigen Ende des Auflagerandes 333, von dem sich der zweite Federarm 337 erstreckt, an dem Haltebereich 334 angeordnet.

Des Weiteren weist die erste Flachbiegefeder 330 in einem Bereich des Anschlusspunktes des zweiten Federarmes 337 an dem Haltebereich 334 ein Betätigungselement 336 zum Betätigen des Spulenschwingsystems auf. Dadurch kann eine Krafteinleitung zur Anregung des Spulenschwingsystems an einem materialstarken Ort der Flachbiegefeder 330 erfolgen.

Die zweite Flachbiegefeder 332 weist ein zweites Kontaktelement 340 auf, das sich von einem längsseitigen Ende des Auflagerandes 333 fortsetzt und von einer die Grundform der zweiten Flachbiegefeder 332 umfassenden Ebene abragt. Das freie Ende des zweiten Kontaktelementes 340 bildet einen Schleifkontakt durch eine Wölbung aus, wobei die Wölbung einen Schleifkontaktpunkt, -linie oder -fläche ausformt. Der Schleifkontakt ist in einer gemeinsamen Ebene mit dem Schleifkontakt des ersten Kontaktelementes 338 oder in einer dem Schleifkontakt des ersten Kontaktelementes 338 nahen Ebene angeordnet. Somit können die jeweils als elektrische Leiter ausgebildeten Flachbiegefedern 330; 332 von einer Seite des Spulenschwingsystems elektrisch kontaktiert werden, um die von der Spule 306 induzierte Spannung abgreifen zu können. Die abragende Ausgestaltung der Kontaktelemente 338, 340 ermöglicht eine vorgespannte Kontaktierung der Kontaktelemente 338, 340 mit einem entsprechenden Gegenkontakt mittels einer unter Druck des Gegenkontaktes auf die Kontaktelemente 338, 340 aufgebrachten Anlage. Dadurch kann ein ständiger elektrischer Kontakt zwischen den Kontaktelementen 338, 340 und dem jeweiligen Gegenkontakt sichergestellt werden. Der jeweilige Gegenkontakt kann beispielsweise als Schleifbahn auf einer Leiterplatte ausgebildet sein.

Die zweite Flachbiegefeder 332 weist gleichfalls eine Anschlussstelle 339 für einen Wicklungskörper wie beispielsweise einen Wicklungsdraht zum Ausbilden der Spule 306 auf, wobei die Anschlussstelle 339 an einem gleichen Ort wie bei der ersten Flachbiegefeder 330 angeordnet ist.

Fig. 7 zeigt eine perspektivische Draufsicht des Induktionsgenerators 301 gemäß dem weiteren Ausführungsbeispiel. Der Induktionsgenerator 301 umfasst eine ringförmige Trägerstruktur 302, welche aus einem kunststoffhaltigen Material ausgeformt ist. Die Trägerstruktur 302 weist einen Innendurchmesser zur Aufnahme der Magnetanordnung 304 und des Magnetflussleiters 305 auf. Die Trägerstruktur 302 umfasst einen ersten Tragring 341 zum Tragen des Magnetflussleiters 305, einen an den ersten Tragring 341 radial außen angrenzenden zweiten Tragring 342 mit gegenüberliegenden Anlageflächen 343 zur jeweiligen Anlage mit dem Auflagerand 333 der ersten und zweiten Flachbiegefeder 330, 332 und einen an den zweiten Tragring 342 radial außen angrenzenden Abschlussring 344 zum radialen Schutz der von der Trägerstruktur 302 aufgenommenen Komponenten. Dabei weist der zweite Tragring 342 entlang einer orthogonal zur radialen Erstreckung der Trägerstruktur 302 verlaufenden Richtung ein größeres Ausmaß als der erste Tragring 341 und ein kleineres Ausmaß als der Abschlussring 344 auf. Der zweite Tragring 342 überragt den ersten Tragring 341 entlang dieser Richtung auf beiden Seiten gleichmäßig. Ferner wird der zweite Tragring 342 entlang dieser Richtung von dem Abschlussring 344 beidseitig gleichmäßig überragt. Die Trägerstruktur 302 ist zu einer durch einen Mittelpunkt der Trägerstruktur 302 radial verlaufenden Mittenebene symmetrisch ausgeformt.

Der Magnetflussleiter 305 wird von dem ersten Tragring 341 getragen. Beispielsweise kann ein Innendurchmesser des ersten Tragrings 341 derart gewählt sein, dass der Magnetflussleiter 305 mittels Presssitz in dem ersten Tragring 341 aufgenommen ist. Alternativ oder zusätzlich können zwischen dem Magnetflussleiter 305 und dem ersten Tragring 341 Haltemittel zur Anwendung kommen. Als Haltemittel können Klebemittel, Eingreifmittel, Rastmittel oder Befestigungsmittel oder andere zum Halten geeignete Mittel in Frage kommen. Alternativ dazu kann der erste Tragring 341 den Magnetflussleiter 305 ausformen, indem entsprechende magnetflussleitende Materialien in dem ersten Tragring 341 integriert sind.

Der zweite Tragring 342 weist in einem Ringsegmentsabschnitt eine Aussparung 345 auf, mittels welcher eine äußere Oberflächenseite des ersten Tragrings 341 freigelegt ist. Die Aussparung 345 setzt sich über den radial außen an den zweiten Tragring 342 angrenzenden Abschlussring 344 fort. Die Aussparung 345 bildet einen Betätigungsbereich zum Betätigen des von der Trägerstruktur 302 aufgenommenen Spulenschwingsystems aus. In den Betätigungsbereich 345 ragt das Betätigungselement 336 der ersten Flachbiegefeder 330.

Der zweite Tragring 342 umfasst in einem weiteren Ringsegmentsabschnitt eine Durchbrechung 346, welche eine in eine der orthogonal zu der radialen Richtung verlaufenden Richtung weisende Seite der Trägerstruktur 302 mit der anderen dazu gegenüberliegenden Seite verbindet. Durch die Durchbrechung ragt das Kontaktelement 340 der zweiten Flachbiegefeder 332. Dadurch kann die Spule 306 auf einer Seite der Trägerstruktur 302 zum Abgreifen der von der Spule 306 erzeugten Induktionsspannung elektrisch kontaktiert werden.

In einem zwischen dem Betätigungsbereich 345 und der Durchbrechung 346 liegenden Ringsegmentsabschnitt der Trägerstruktur 302 ist die Anlagefläche 343 zur jeweiligen Anlage mit dem Auflagerand 333 der ersten und zweiten Flachbiegefeder 330, 332 angeordnet.

In dem aufgenommenen Zustand des Spulenschwingsystems in der Trägerstruktur 302 weisen die zu der ersten und zweiten Flachbiegefeder 330, 332 zeigenden Randseiten des ersten Tragrings 341 einen solchen Abstand zu der ersten und zweiten Flachbiegefeder 330, 332 auf, dass die Spule 306 nach Anregung durch Betätigen des Betätigungselementes 336 ungehindert in der Trägerstruktur 302 oszillieren kann. Dazu ist ein in orthogonal zu der radialen Richtung der Trägerstruktur 302 verlaufendes Ausmaß des ersten Tragrings 341 nicht größer als ein in gleicher Richtung verlaufendes Ausmaß des Magnetflussleiters 305.

Fig. 8 zeigt eine perspektivische Seitenansicht des Spulenschwingsystems aus Fig. 6 ohne Spulenwicklung. Figuren 9A und 9B zeigen eine schematische Seitenansicht des Spulenschwingsystems mit Spulenwicklung. Der Spulenträger 324 umfasst zwischen den stirnseitigen Enden zwei umlaufende Spulenkanäle 350 zur jeweiligen Aufnahme einer Spulenwicklung zum Ausbilden der Spule 306. Die beiden Spulenkanäle 350 sind durch einen den Spulenträger 324 teilweise umlaufenden Trennsteg 351 voneinander getrennt, wobei ein Seitenrand des Trennsteges 351 sowie ein Seitenrand der Haltevorsprünge 325 des Spulenträgers 324 den jeweiligen Spulenkanal 350 in Längsachsenrichtung des Spulenträgers 324 begrenzen. Der Trennsteg 351 formt an seinem längsseitigen Ende eine Umlaufnase 352 aus, über welche eine Spulenwicklung aus einem der Spulenkanäle 350 in den anderen Spulenkanal 350 überführt werden kann, wobei eine Spulenwicklungsrichtung der in den Spulenkanälen 350 verlaufenden Spulenwicklungen zueinander entgegensetzt ist. Damit wird die in dem Luftkanal 312 vorhandene entgegengesetzte Magnetflussrichtung der in den Bereichen des ersten und zweiten Polabschnitts 308, 310 vorherrschende magnetische Flüsse berücksichtigt, wodurch eine Spulenfläche der Spule 306 vergrößert ist.

Die für die in den Figuren gezeigten Ausführungsbeispiele ausgewählten Bauformen ermöglichen eine leichte Verkapselung des Induktionsgenerators 200, 301, falls z. B. eine staub- oder wasserdichte Ausführung gewünscht ist.

Es sind natürlich außer den in den Figuren gezeigten auch weitere Aufbauten des Magnetsystems möglich. Wichtig ist, dass die Wicklung der Spule 206, 306 in einem möglichst starken Magnetfeld oszillieren kann. Das bewegliche Schwingsystem des Induktionsgenerators 200, 301 ist sehr kompakt und leicht ausgeführt. Dabei kann die Spule 206, 306 nur bei sehr starken Vibrationen von außen in ungewollte Schwingungen geraten. Um eine Erzeugung von "falschen" Funksignalen zu verhindern, kann der Schwingkörper bzw. die Spule 206, 306 ein einem Schaltergehäuse durch den Betätiger in Ruhe- und Endstellung blockiert werden. Eine weitere Möglichkeit besteht darin, die induzierte Spannung zu messen und nur einen Spannungsanstieg über einen bestimmten Level als ein Schaltsignal zu werten.

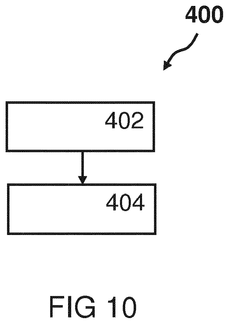

Fig. 10 zeigt ein Ablaufdiagramm für ein Ausführungsbeispiel eines Verfahrens 400 zum Generieren eines elektrischen Stroms unter Verwendung eines Induktionsgenerators. Das Verfahren 400 kann in Verbindung mit einem Induktionsgenerator, wie er im Vorhergehenden anhand der Figuren 2A bis 9B ausführlich erläutert ist, vorteilhaft ausgeführt werden. In einem Schritt 402 wird durch Betätigen eines Betätigungselements des Induktionsgenerators eine mittels eines Federelements bewegbar gelagerte Spule um ein vorbestimmtes Maß oder mit einer vorbestimmten Kraft ausgelenkt. Infolgedessen führt die Spule eine Oszillationsbewegung quer zu einem magnetischen Fluss eines in dem Induktionsgenerator bestehenden Dauermagnetfelds aus. In einem Schritt 404 wird mittels einer auf der Oszillationsbewegung der Spule basierenden elektromagnetischen Induktion ein elektrischer Strom in einer Wicklung der Spule induziert. Über geeignete Kontakte wird der elektrische Strom zum Betrieb beispielsweise eines autarken Funkschalters abgegriffen.

<u>Bezugszeichen</u>

| | |
|---|---|
| 100 | Spule |
| 102 | Magnetfeld |
| 104 | oszillierende Relativbewegung |
| 106 | Schwingamplitude |
| 108 | effektiv genutzte Wicklungslänge |
| 110 | Verlustbereich |
| 112 | Magnetfeldabschnitt |
| 114 | weiterer Magnetfeldabschnitt |

| | |
|---|---|
| 200, 301 | Induktionsgenerator |
| 202, 302 | Trägerstruktur |
| 204, 304 | Magnetanordnung |
| 206, 306 | ringförmige Spule |
| 208, 308 | erster Polabschnitt |
| 210, 310 | zweiter Polabschnitt |
| 212, 312 | Luftkanal |
| 214, 314 | Magnet |
| 216 | umlaufender Außenrandbereich des ersten Polabschnitts |
| 218 | Außenwand des Luftkanals |
| 220 | Innenwand des Luftkanals |
| 222, 322 | magnetischer Fluss des Dauermagnetfelds |
| 224 | Oszillationsbewegung |
| 226 | Mittelachse der Spule |
| 228, 328 | Federelement |
| 230 | erste Doppelflachfeder |
| 232 | zweite Doppelflachfeder |
| 234, 324 | Spulenträger |
| 236, 336 | Betätigungselement |
| 238 | Gehäuse |
| 240 | Befestigungsklammer |
| 242 | Schlitz |
| 244 | Aufnahmebereich |
| 246 | Gehäusewand |
| 248 | Gehäuseboden |
| 250 | Vorsprung |
| 252 | weiterer Vorsprung |
| 254 | Federaufnahme |
| 300 | zylinderartiger Mittenbereich des ersten Polabschnitts |
| 305 | Magnetflussleiter |
| 325, 349 | Haltevorsprung |
| 330 | erste Flachbiegefeder |
| 332 | zweite Flachbiegefeder |
| 333 | Auflagerand |
| 334 | Haltebereich |
| 335 | erster Federarm |
| 337 | zweiter Federarm |
| 338 | erstes Kontaktelement |
| 339 | Anschlussstelle |
| 340 | zweites Kontaktelement |
| 341 | erster Tragring |
| 342 | zweiter Tragring |
| 343 | Anlagefläche |
| 344 | Abschlussring |
| 345 | Betätigungsbereich |
| 346 | Durchbrechung |
| 348 | Halteelement |
| 350 | Spulenkanal |
| 351 | Trennsteg |
| 352 | Umlaufnase |
| 400 | Verfahren zum Generieren eines elektrischen Stroms |
| 402 | Schritt des Auslenkens |
| 404 | Schritt des Generierens |

**Patentansprüche**

1. Induktionsgenerator (200; 301), mit einer Magnetanordnung (204; 304) zum Erzeugen eines Dauermagnetfelds, einer ringförmigen Spule (206; 306), einem Federelement (228; 328) und einem von dem Dauermagnetfeld durchdrungenen Luftkanal (212; 312), wobei die Magnetanordnung (204; 304) einen ersten Polabschnitt (208; 308), einen zweiten Polabschnitt (210; 310) und einen zwischen dem ersten Polabschnitt (208; 308) und dem zweiten Polabschnitt (210; 310) angeordneten Magneten (214; 314) umfasst, die Spule (206; 306) mit dem Federelement (228; 328) verbunden und in dem Luftkanal (212; 312) bewegbar angeordnet ist und das Federelement (228; 328) ausgebildet ist, um ansprechend auf eine Auslenkung der Spule (206; 306) eine Oszillationsbewegung (224) der Spule (206; 306) in dem Luftkanal (212; 312) quer zu einem magnetischen Fluss (222; 322) des Dauermagnetfelds innerhalb des Luftkanals (212; 312) zu bewirken, wobei der Luftkanal (212; 312) eine Ringform aufweist und ausgebildet ist, die ringförmige Spule (206; 306) vollumfänglich aufzunehmen, **dadurch gekennzeichnet, dass** das Federelement (228; 328) einen elektrischen Leiter zur elektrischen Kontaktierung der Spule (206; 306) ausformt.

2. Induktionsgenerator (200) gemäß Anspruch 1, **dadurch gekennzeichnet, dass** der Luftkanal (212) durch wenigstens zwei zueinander gegenüberliegende Wandungsbereiche (218, 220) begrenzt ist, wobei einer der Wandungsbereiche (218; 220) durch einen Wandungsabschnitt des ersten Polabschnitts (208) und der andere der Wandungsbereiche (218; 220) durch eine Seitenfläche des zweiten Polabschnitts (210) ausgebildet ist.

3. Induktionsgenerator (200) gemäß Anspruch 2, **dadurch gekennzeichnet, dass** der erste Polabschnitt (208) einen Topf zum Aufnehmen des Magneten (214) und des zweiten Polabschnitts (210) ausformt, wobei der Wandungsabschnitt (218) des ersten Polabschnitts (208) durch den umlaufenden Außenrandbereich (216) des topfförmigen ersten Polabschnitts (208) ausgebildet ist.

4. Induktionsgenerator (200) gemäß Anspruch 2, **dadurch gekennzeichnet, dass** die Magnetanordnung (204) ringförmig ausgebildet ist, wobei der erste Polabschnitt (208) eine nabenartige Ringaufnahme zum Aufnehmen des Magneten (214) und des zweiten Polabschnitts (210) ausformt, wobei der Wandungsabschnitt (220) des ersten Polabschnitts (208) durch einen zylinderartigen Mittenbereich (300) des ersten Polabschnitts (208) ausgebildet ist.

5. Induktionsgenerator (200) gemäß einem der vorangegangenen Ansprüche, **dadurch gekennzeichnet, dass** das Dauermagnetfeld einen torusförmigen Magnetfeldkreis bildet, dessen magnetischer Fluss (222) den Luftkanal (212) zwischen dem ersten Polabschnitt (208) und dem zweiten Polabschnitt (210) quert.

6. Induktionsgenerator (301) gemäß Anspruch 1, **dadurch gekennzeichnet, dass** der Induktionsgenerator (301) einen Magnetflussleiter (305) umfasst, welcher der Magnetanordnung (304) gegenüberliegt, wobei der Luftkanal (312) wenigstens durch einen Wandungsabschnitt der Magnetanordnung (304) und durch einen diesem Wandungsabschnitt gegenüberliegenden Wandungsabschnitt des Magnetflussleiters (305) begrenzt ist.

7. Induktionsgenerator (200; 301) gemäß einem der vorangegangenen Ansprüche, **dadurch gekennzeichnet, dass** das Federelement (228; 328) ferner ausgebildet ist, die Oszillationsbewegung (224; 324) der Spule (206; 306) entlang einer Mittelachse (226; 326) der Spule (206; 306) zu bewirken.

8. Induktionsgenerator (200; 301) gemäß einem der vorangegangenen Ansprüche, **dadurch gekennzeichnet, dass** eine Wicklung der Spule (206; 306) längs des Luftkanals (212; 312) verläuft.

9. Induktionsgenerator (200; 301) gemäß einem der vorangegangenen Ansprüche, **gekennzeichnet durch** eine Trägerstruktur (202; 302) zum Tragen der Magnetanordnung (204) und des Federelementes (228; 328), wobei ein Ende des Federelements (228; 328) mittels der Trägerstruktur (202; 302) ortsfest gehalten ist.

10. Induktionsgenerator (200; 301) gemäß Anspruch 9, **dadurch gekennzeichnet, dass** die Spule (206; 306) einen Spulenträger (234; 334) aufweist, der mit einem dem gehaltenen Ende des Federelements (228; 328) gegenüberliegenden freien Ende des Federelements (228; 328) verbunden ist.

11. Induktionsgenerator (200; 301) gemäß Anspruch 10, **dadurch gekennzeichnet, dass** der Spulenträger (234; 334) ein Betätigungselement (236; 336) zum Auslenken der Spule (206; 306) aufweist.

12. Induktionsgenerator (200; 301) gemäß einem der vorangegangenen Ansprüche, **dadurch gekennzeichnet, dass** das Federelement (228; 328) eine erste Doppelflachfeder (230; 330) und eine zweite Doppelflachfeder (232; 332) aufweist, zwischen denen die Spule (206; 306) in dem Luftkanal (212; 312) schwingend gelagert ist.

13. Verfahren (400) zum Generieren eines elektrischen Stroms unter Verwendung eines Induktionsgenerators (200; 301) mit einer Magnetanordnung (204; 304) zum Erzeugen eines Dauermagnetfelds, einer ringförmigen Spule (206; 306), einem Federelement (228; 328) und einem von dem Dauermagnetfeld durchdrungenen Luftkanal (212; 312), wobei die Magnetanordnung (204; 304) einen ersten Polabschnitt (208; 308), einen zweiten Polabschnitt (210; 310) und einen zwischen dem ersten Polabschnitt (208; 308) und dem zweiten Polabschnitt (210; 310) angeordneten Magneten (214; 314) umfasst, die Spule (206; 306) mit dem Federelement (228; 328) verbunden und in dem Luftkanal (212; 312) bewegbar angeordnet ist, und wobei der Luftkanal (212; 312) eine Ringform aufweist und ausgebildet ist, die ringförmige Spule (206; 306) vollumfänglich aufzunehmen, und wobei das Federelement (228; 328) einen elektrischen Leiter zur elektrischen Kontaktierung der Spule (206; 306) ausformt, wobei das Verfahren (400) die folgenden Schritte aufweist:

Auslenken (402) der Spule (206; 306) derart, dass eine Oszillationsbewegung (224; 324) der Spule (206; 306) in dem Luftkanal (212; 312) quer zu einem magnetischen Fluss (222; 322) des Dauermagnetfelds innerhalb des Luftkanals (212; 312) bewirkt wird; und
Generieren (404) des elektrischen Stroms in der Spule (206; 306) mittels elektromagnetischer Induktion basierend auf der Oszillationsbewegung (224) der Spule (206; 306).

## Claims

1. Induction generator (200; 301), comprising a magnet arrangement (204; 304) for generating a permanent magnetic field, an annular coil (206; 306), a spring element (228; 328) and an air duct (212; 312) through which the permanent magnetic field passes, wherein the magnet arrangement (204; 304) comprises a first pole section (208; 308), a second pole section (210; 310) and a magnet (214; 314) which is arranged between the first pole section (208; 308) and the second pole section (210; 310), the coil (206; 306) is connected to the spring element (228; 328) and is arranged in a movable manner in the air duct (212; 312) and the spring element (228; 328) is designed to effect, in response to a deflection of the coil (206; 306), an oscillation movement (224) of the coil (206; 306) in the air duct (212; 312) transversely to a magnetic flux (222; 322) of the permanent magnetic field within the air duct (212; 312), wherein the air duct (212; 312) has a ring shape and is designed to fully receive the annular coil (206; 306), **characterized in that** the spring element (228; 328) forms an electrical conductor for making electrical contact with the coil (206; 306).

2. Induction generator (200) according to Claim 1, **characterized in that** the air duct (212) is delimited by at least two wall regions (218, 220) which are situated opposite one another, wherein one of the wall regions (218; 220) is formed by a wall section of the first pole section (208) and the other of the wall regions (218; 220) is formed by a side face of the second pole section (210).

3. Induction generator (200) according to Claim 2, **characterized in that** the first pole section (208) forms a pot for receiving the magnet (214) and the second pole section (210), wherein the wall section (218) of the first pole section (208) is formed by the circumferential outer edge region (216) of the pot-like first pole section (208).

4. Induction generator (200) according to Claim 2, **characterized in that** the magnet arrangement (204) is of annular design, wherein the first pole section (208) forms a hub-like ring receptacle for receiving the magnet (214) and the second pole section (210), wherein the wall section (220) of the first pole section (208) is formed by a cylindrical middle region (300) of the first pole section (208).

5. Induction generator (200) according to one of the preceding claims, **characterized in that** the permanent magnetic field forms a toroidal magnetic field circuit, the magnetic flux (222) of which crosses the air duct (212) between the first pole section (208) and the second pole section (210).

6. Induction generator (301) according to Claim 1, **characterized in that** the induction generator (301) comprises a magnetic flux conductor (305) which is situated opposite the magnet arrangement (304), wherein the air duct (312) is delimited at least by a wall section of the magnet arrangement (304) and by a wall section of the magnetic flux conductor (305) that is situated opposite the said wall section of the magnet arrangement.

7. Induction generator (200; 301) according to one of the preceding claims, **characterized in that** the spring element (228; 328) is further designed to effect the oscillation movement (224; 324) of the coil (206; 306) along a centre axis (226; 326) of the coil (206; 306).

8. Induction generator (200; 301) according to one of the preceding claims, **characterized in that** a winding of the coil (206; 306) runs along the air duct (212; 312).

9. Induction generator (200; 301) according to one of the preceding claims, **characterized by** a carrier structure (202; 302) for carrying the magnet arrangement (204) and the spring element (228; 328), wherein one end of the spring element (228; 328) is held fixed in position by means of the carrier structure (202; 302).

10. Induction generator (200; 301) according to Claim 9, **characterized in that** the coil (206; 306) has a coil carrier (234; 334) which is connected to a free end of the spring element (228; 328) that is situated opposite the held end of the spring element (228; 328).

11. Induction generator (200; 301) according to Claim 10, **characterized in that** the coil carrier (234; 334) has an operating element (236; 336) for deflecting the coil (206; 306) .

12. Induction generator (200; 301) according to one of the preceding claims, **characterized in that** the spring element (228; 328) has a first double flat spring (230; 330) and a second double flat spring (232; 332) between which the coil (206; 306) is mounted in an oscillating manner in the air duct (212; 312).

13. Method (400) for generating an electric current using an induction generator (200; 301) comprising a magnet arrangement (204; 304) for generating a permanent magnetic field, an annular coil (206; 306), a spring element (228; 328) and an air duct (212; 312) through which the permanent magnetic field passes, wherein the magnet arrangement (204; 304) comprises a first pole section (208; 308), a second pole section (210; 310) and a magnet (214; 314) which is arranged between the first pole section (208; 308) and the second pole section (210; 310), the coil (206; 306) is connected to the spring element (228; 328) and is arranged in a movable manner in the air duct (212; 312), and wherein the air duct (212; 312) has a ring shape and is designed to fully receive the annular coil (206; 306), and wherein the spring element (228; 328) forms an electrical conductor for making electrical contact with the coil (206; 306), wherein the method (400) comprises the following steps: deflecting (402) the coil (206; 306) in such a way that an oscillation movement (224; 324) of the coil (206; 306) is effected in the air duct (212; 312) transversely to a magnetic flux (222; 322) of the permanent magnetic field within the air duct (212; 312); and generating (404) the electric current in the coil (206; 306) by means of electromagnetic induction based on the oscillation movement (224) of the coil (206; 306).

**Revendications**

1. Générateur à induction (200 ; 301), comprenant un agencement d'aimants (204 ; 304) pour générer un champ magnétique permanent, une bobine annulaire (206 ; 306), un élément faisant ressort (228 ; 328), et un canal d'air (212 ; 312) traversé par le champ magnétique permanent, dans lequel l'agencement d'aimants (204 ; 304) comprend un premier segment polaire (208 ; 308), un deuxième segment polaire (210 ; 310) et un aimant (214 ; 314) disposé entre le premier segment polaire (208 ; 308) et le deuxième segment polaire (210 ; 310), la bobine (206 ; 306) est reliée à l'élément faisant ressort (228 ; 328) et est disposée de manière mobile dans le canal d'air (212 ; 312), et l'élément faisant ressort (228 ; 328) est réalisé pour provoquer en réaction à une déviation de la bobine (206 ; 306) un mouvement oscillatoire (224) de la bobine (206 ; 306) dans le canal d'air (212 ; 312) transversalement à un flux magnétique (222 ; 322) du champ magnétique permanent à l'intérieur du canal d'air (212 ; 312), dans lequel le canal d'air (212 ; 312) présente une forme annulaire et est réalisé pour recevoir intégralement la bobine annulaire (206 ; 306), **caractérisé en ce que** l'élément faisant ressort (228 ; 328) configure un conducteur électrique pour la mise en contact électrique de la bobine (206 ; 306).

2. Générateur à induction (200) selon la revendication 1, **caractérisé en ce que** le canal d'air (212) est délimité par au moins deux zones de paroi (218, 220) opposées l'une à l'autre, l'une des zones de paroi (218 ; 220) étant réalisée par une partie de paroi du premier segment polaire (208), et l'autre des zones de paroi (218 ; 220) étant réalisée par une surface latérale du deuxième segment polaire (210).

3. Générateur à induction (200) selon la revendication 2, **caractérisé en ce que** le premier segment polaire (208) configure un godet destiné à recevoir l'aimant (214) et le deuxième segment polaire (210), la partie de paroi (218) du premier segment polaire (208) étant réalisée par la zone de bord extérieure périphérique (216) du premier segment polaire (208) en forme de godet.

4. Générateur à induction (200) selon la revendication 2, **caractérisé en ce que** l'agencement d'aimants (204) est réalisé en forme d'anneau, le premier segment polaire (208) configurant un logement annulaire en forme de moyeu destiné à recevoir l'aimant (214) et le deuxième segment polaire (210), la partie de paroi (220) du premier segment polaire (208) étant réalisée par une zone centrale cylindrique (300) du premier segment polaire (208).

5. Générateur à induction (200) selon l'une quelconque des revendications précédentes, **caractérisé en ce que** le champ magnétique permanent constitue un circuit de champ magnétique en forme de tore dont le flux magnétique (222) traverse le canal d'air (212) entre le premier segment polaire (208) et le deuxième segment polaire (210).

6. Générateur à induction (301) selon la revendication 1, **caractérisé en ce que** le générateur à induction (301) comprend un conducteur de flux magnétique (305) qui est opposé à l'agencement d'aimants (304), le canal d'air (312) étant délimité au moins par une partie de paroi de l'agencement d'aimants (304) et par une partie de paroi du conducteur de flux magnétique (305) opposée à cette partie de paroi.

7. Générateur à induction (200 ; 301) selon l'une quelconque des revendications précédentes, **caractérisé en ce que** l'élément faisant ressort (228 ; 328) est en outre réalisé pour provoquer le mouvement oscillatoire (224 ; 324) de la bobine (206 ; 306) le long d'un axe central (226 ; 326) de la bobine (206 ; 306).

8. Générateur à induction (200 ; 301) selon l'une quelconque des revendications précédentes, **caractérisé en ce qu'**un enroulement de la bobine (206 ; 306) s'étend le long du canal d'air (212 ; 312).

9. Générateur à induction (200 ; 301) selon l'une quelconque des revendications précédentes, **caractérisé par** une structure porteuse (202 ; 302) destinée à porter l'agencement d'aimants (204) et l'élément faisant ressort (228 ; 328), une extrémité de l'élément faisant ressort (228 ; 328) étant maintenue de manière stationnaire au moyen de la structure porteuse (202 ; 302) .

10. Générateur à induction (200 ; 301) selon la revendication 9, **caractérisé en ce que** la bobine (206 ; 306) présente un support de bobine (234 ; 334) qui est relié à une extrémité libre de l'élément faisant ressort (228 ; 328), opposée à l'extrémité retenue de l'élément faisant ressort (228 ; 328).

11. Générateur à induction (200 ; 301) selon la revendication 10, **caractérisé en ce que** le support de bobine (234 ; 334) présente un élément d'actionnement (236 ; 336) pour dévier la bobine (206 ; 306).

12. Générateur à induction (200 ; 301) selon l'une quelconque des revendications précédentes, **caractérisé en ce que** l'élément faisant ressort (228 ; 328) présente un premier ressort plat double (230 ; 330) et un deuxième ressort plat double (232 ; 332) entre lesquels la bobine (206 ; 306) est montée oscillante dans le canal d'air (212 ; 312).

13. Procédé (400) de génération d'un courant électrique en utilisant un générateur à induction (200 ; 301) comprenant un agencement d'aimants (204 ; 304) pour générer un champ magnétique permanent, une bobine annulaire (206 ; 306), un élément faisant ressort (228 ; 328) et un canal d'air (212 ; 312) traversé par le champ magnétique permanent, dans lequel l'agencement d'aimants (204 ; 304) comprend un premier segment polaire (208 ; 308), un deuxième segment polaire (210 ; 310) et un aimant (214 ; 314) disposé entre le premier segment polaire (208 ; 308) et le deuxième segment polaire (210 ; 310), la bobine (206 ; 306) est reliée à l'élément faisant ressort (228 ; 328) et est disposée dans le canal d'air (212 ; 312), et dans lequel le canal d'air (212 ; 312) présente une forme d'anneau et est réalisé pour recevoir intégralement la bobine annulaire (206 ; 306), et dans lequel l'élément faisant ressort (228 ; 328) configure un conducteur électrique pour la mise en contact électrique de la bobine (206 ; 306), le procédé (400) présentant les étapes suivantes consistant à :

dévier (402) la bobine (206 ; 306) de façon à provoquer un mouvement oscillatoire (224 ; 324) de la bobine (206 ; 306) dans le canal d'air (212 ; 312) transversalement à un flux magnétique (222 ; 322) du champ magnétique permanent à l'intérieur du canal d'air (212 ; 312) ; et

générer (404) le courant électrique dans la bobine (206 ; 306) au moyen d'une induction électromagnétique sur la base du mouvement oscillatoire (224) de la bobine (206 ; 306).

Fig. 1

Fig. 2A

Fig. 2B

Fig. 2C

Fig. 2D

Fig. 2E

Fig. 2F

Fig. 2G

Fig. 2H

200  240  208  216

214
210
246
232
252
234

230  246  238  244  254  248  250  206

**Fig. 2I**

204  208

212  214

C  C

210

**Fig. 3A**

218 212 220    300          204

214

210

208

Fig. 3B

204

210

214

208

300

Fig. 3C

FIG 4

FIG 5

336 349 304 330 335 333 339 305 333 332 339

337 348 334 340 338

## FIG 6

301 333 304 338 346 340 343 344 336 342 343

330 302 341 332 345

## FIG 7

351    338
325    340
339    349

350
350
324    304
352

330
332    } 328

FIG 8

332    306    330
332
349
325    325    352
349
339    339    351
351
339    339

FIG 9A    FIG 9B

400

402

404

FIG 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10112072 A1
- US 3067404 A